# EUROPEAN PATENT APPLICATION

(11) **EP 4 568 360 A1**
(43) Date of publication of application: **11.06.2025**
(21) Application number: 23850411.2
(22) Date of filing: 02.08.2023
(51) Int. Cl.: H04W 52/02, H04W 68/02, H04W 72/23, H04W 76/28

(54) **METHOD, USER EQUIPMENT, PROCESSING DEVICE, STORAGE MEDIUM, AND COMPUTER PROGRAM FOR RECEIVING DOWNLINK CHANNEL, AND METHOD AND BASE STATION FOR TRANSMITTING DOWNLINK CHANNEL**

(30) Priority: 02.08.2022 KR 20220096061; 29.09.2022 US 202263411547 P; 04.11.2022 KR 20220146427
(71) Applicant: LG Electronics Inc., Yeongdeungpo-gu Seoul 07336 (KR)
(72) Inventor: MYUNG, Sechang, Seoul 06772 (KR); KIM, Seonwook, Seoul 06772 (KR); LEE, Youngdae, Seoul 06772 (KR); KIM, Jaehyung, Seoul 06772 (KR); YANG, Suckchel, Seoul 06772 (KR); HWANG, Seunggye, Seoul 06772 (KR)
(74) Representative: Frenkel, Matthias Alexander
(86) International application number: PCT/KR2023/011296
(87) International publication number: WO 2024/029911

(57) **Abstract**

A user equipment (UE) may comprise: receiving a UE-specific discontinuous reception (DRX) configuration and a cell-specific DRX configuration; performing first predetermined operations during a first active time according to the cell-specific DRX configuration; and performing second predetermined operations during a time other than the first active time according to the cell-specific DRX configuration.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

### Technical Problem

The present disclosure is to provide energy saving methods and/or procedures for a base station (BS) and a user equipment (UE).

The present disclosure provides methods and/or procedures for dynamically indicating an offset value relative to a discontinuous reception (DRX) cycle starting point.

The present disclosure also provides methods and/or procedures for configuring/indicating ON/OFF for an ON duration of a DRX cycle.

The present disclosure also provides methods and/or procedures for configuring a DRX group for network energy saving (NES).

The present disclosure also provides methods and/or procedures of a base station (BS) and a UE when a UE-specific DRX and/or cell-specific DTX/DRX are configured.

The objects to be achieved with the present disclosure are not limited to what has been particularly described hereinabove and other objects not described herein will be more clearly understood by persons skilled in the art from the following detailed description.

### Technical Solution

According to an aspect of the present disclosure, a method for a user equipment (UE) to receive a downlink (DL) channel in a wireless communication system is provided. The method includes receiving a user equipment (UE)-specific discontinuous reception (DRX) configuration and a cell-specific DRX configuration based on receiving the random access response, performing first predetermined operations during a first active time according to the cell-specific DRX configuration, and performing second predetermined operations during a time outside the first active time according to the cell-specific DRX configuration.

According to another aspect of the present disclosure, a UE for receiving a DL channel in a wireless communication system is provided. The UE includes at least one transceiver, at least one processor, and at least one computer memory operably connected to the at least one processor and storing instructions that, when executed, cause the at least one processor to perform operations. The operations may include receiving a user equipment (UE)-specific discontinuous reception (DRX) configuration and a cell-specific DRX configuration based on receiving the random access response, performing first predetermined operations during a first active time according to the cell-specific DRX configuration, and performing second predetermined operations during a time outside the first active time according to the cell-specific DRX configuration.

According to another aspect of the present disclosure, a processing device is provided. The processing device includes at least one transceiver, at least one processor, and at least one computer memory operably connected to the at least one processor and storing instructions that, when executed, cause the at least one processor to perform operations. The operations include receiving a user equipment (UE)-specific discontinuous reception (DRX) configuration and a cell-specific DRX configuration based on receiving the random access response, performing first predetermined operations during a first active time according to the cell-specific DRX configuration, and performing second predetermined operations during a time outside the first active time according to the cell-specific DRX configuration.

According to another aspect of the present disclosure, a computer-readable storage medium is provided. The computer-readable storage non-transitory medium stores at least one computer program including instructions that, when executed by at least one processor, cause the at least one processor to perform operations for a user equipment (UE). The operations include receiving a random access response based on the RACH preamble, receiving a UE-specific discontinuous reception (DRX) configuration and a cell-specific DRX configuration based on receiving the random access response, performing first predetermined operations during a first active time according to the cell-specific DRX configuration, and performing second predetermined operations during a time outside the first active time according to the cell-specific DRX configuration.

According to another aspect of the present disclosure, a method for a BS to transmit a DL channel to a UE in a wireless communication system is provided. The method includes transmitting a UE-specific discontinuous reception (DRX) configuration and a cell-specific DRX configuration based on receiving the random access response, performing first predetermined operations during a first active time according to the cell-specific DRX configuration, and performing second predetermined operations during a time outside the first active time according to the cell-specific DRX configuration.

According to another aspect of the present disclosure, a BS for transmitting a DL channel to a UE in a wireless communication system is provided. The Bs includes at least one transceiver, at least one processor, and at least one computer memory operably connected to the at least one processor and storing instructions that, when executed, cause the at least one processor to perform operations. The operations include transmitting a UE-specific discontinuous reception (DRX) configuration and a cell-specific DRX configuration based on receiving the random access response, performing first predetermined operations during a first active time according to the cell-specific DRX configuration, and performing second predetermined operations during a time outside the first active time according to the cell-specific DRX configuration.

In each aspect of the present disclosure, the first predetermined operations may include operations defined for cell-specific DRX, and the second predetermined operations may include operations according to the UE-specific DRX configuration.

In each aspect of the present disclosure, the first predetermined operations may include operations according to the UE-specific DRX configuration, and the second predetermined operations may include operations defined for the cell-specific DRX.

In each aspect of the present disclosure, the operations according to the UE-specific DRX configuration may include performing DL channel monitoring during a second active time according to the UE-specific DRX configuration, omitting the DL channel monitoring during a time outside the second active time, or continuing repetitions of a signal for which repetition is configured outside the second active time.

In each aspect of the present disclosure, the operations defined for the cell-specific DRX may include transmitting and receiving only predetermined signals during the first active time, receiving a common signal at a long period during a time outside the first active time, or omitting repetitions of a signal for which repetition is configured outside the first active time.

In each aspect of the present disclosure, the operations defined for the cell-specific DRX may include transmitting and receiving only predetermined signals during the first active time, omitting reception of a common signal during a time outside the first active time, or omitting repetitions of a signal for which repetition is configured outside the first active time.

In each aspect of the present disclosure, the operations defined for the cell-specific DRX may include receiving a network energy saving (NES) mode configuration, and performing NES mode operations during a NES mode operation duration, and in this case, the NES mode operations may include any one of omitting transmission and reception of predetermined signals, reducing a frequency band of the predetermined signals, reducing a number of antenna ports for the predetermined signals, or reducing transmit power of the predetermined signals.

In each aspect of the present disclosure, the operations may further include starting driving of an On duration timer according to the cell-specific DRX configuration to start the first active time, receiving a physical downlink control channel (PDCCH) during the first active time, and terminating the first active time based on expiration of the On duration timer according to the cell-specific DRX configuration.

In each aspect of the present disclosure, the operations may further include starting driving of the On duration timer according to the cell-specific DRX configuration to start the first active time, receiving a physical downlink control channel (PDCCH) during the first active time, and extending the first active time by driving an inactivity timer according to the cell-specific DRX configuration based on the PDCCH including group common downlink control information (GC-DCI).

The foregoing solutions are merely a part of the examples of the present disclosure and various examples into which the technical features of the present disclosure are incorporated may be derived and understood by persons skilled in the art from the following detailed description.

### Advantageous Effects

According to implementation(s) of the present disclosure, methods and/or procedures for energy saving of a base station (BS) and a user equipment (UE) may be provided.

According to implementation(s) of the present disclosure, methods and/or procedures for dynamically indicating an offset value relative to a discontinuous reception (DRX) cycle starting point may be provided.

According to implementation(s) of the present disclosure, methods and/or procedures for configuring/indicating ON/OFF for an ON duration of a DRX cycle may be provided.

According to implementation(s) of the present disclosure, methods and/or procedures for configuring a DRX group for network energy saving (NES) may be provided.

According to implementation(s) of the present disclosure, methods and/or procedures of a base station (BS) and a user equipment (UE) when a UE-specific DRX and/or cell-specific DTX/DRX are configured may be provided.

According to implementation(s) of the present disclosure, the power consumption of the BS and the UE may be reduced.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

FIG. 1 illustrates an example of a communication system 1 to which implementations of the present disclosure are applied.
FIG. 2 is a block diagram illustrating examples of communication devices capable of performing a method according to the present disclosure.
FIG. 3 illustrates another example of a wireless device capable of performing implementation(s) of the present disclosure.
FIG. 4 illustrates an example of a frame structure used in a 3rd generation partnership project (3GPP)-based wireless communication system.
FIG. 5 illustrates a resource grid of a slot.
FIG. 6 illustrates a network communication process for performing implementation(s) of the present disclosure.
FIG. 7 illustrates a discontinuous reception (DRX) operation applicable to implementation(s) of the present disclosure.
FIG. 8 illustrates a case in which a long DRX cycle and a short DRX cycle are configured.
FIG. 9 illustrates network energy saving (NES) according to the present disclosure.
FIG. 10 illustrates a flow of an operation of a network according to some implementations of the present disclosure.
FIG. 11 illustrates a DL channel reception flow in a UE according to some implementations of the present disclosure.
FIG. 12 illustrates a DL channel transmission flow in a BS according to some implementations of the present disclosure.
FIG. 13 illustrates a DRX operation in a UE according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE, and 3GPP new radio or new radio access technology (NR) is an evolved version of 3GPP LTE/LTE-A.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

For dual connectivity (DC) operation, the term primary SCG cell (PSCell) refers a secondary cell group (SCG) cell to which a UE performs random access when performing RRC reconfiguration and synchronization processes.

In a dual connectivity (DC) operation, the term special cell (SpCell) refers to a Pcell of a master cell group (MCG) or a Pcell of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. For a UE in RRC_CONNECTED state, that is not configured with CA or DC, only one serving cell including only the Pcell is present. For a UE in RRC_CONNECTED state, that is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE in which CA is configured and DC is not configured, a Pcell PUCCH group including a Pcell and 0 or more Scells and a Scell PUCCH group including only Scell(s) may be configured. In the case of an Scell, an Scell (hereinafter referred to as a PUCCH cell) in which a PUCCH related to the corresponding cell may be configured. An Scell that indicates a PUCCH Scell belongs to an Scell PUCCH group, PUCCH transmission of related UCI on the PUCCH Scell is performed, an Scell that does not indicate a PUCCH Scell or indicates a Pcell as a cell for PUCCH transmission belongs to a Pcell PUCCH group, and PUCCH transmission of the related UCI is performed on the Pcell.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), a positioning reference signal (PRS) and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUSCH/PUCCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DL data/DL control information on or through a PBCH/PDCCH/PDSCH, respectively.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

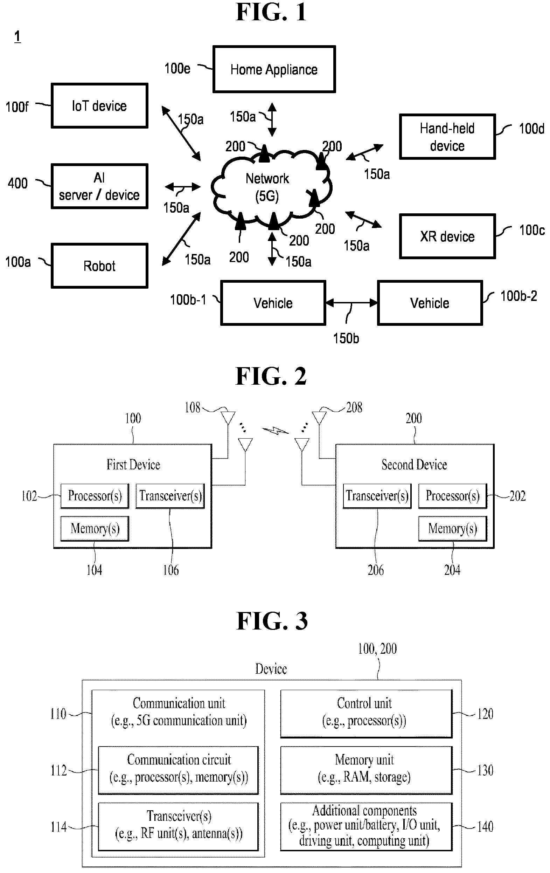

FIG. 1 illustrates an example of a communication system 1 to which implementations of the present disclosure are applied.

Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless device 200a may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 2 is a block diagram illustrating examples of communication devices capable of performing a method according to the present disclosure.

Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the afore-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the afore-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the afore-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the afore-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure.

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

A communication device of the present disclosure includes at least one processor; and at least one computer memory operably connected to the at least one processor and configured to store instructions for causing, when executed, the at least one processor to perform operations according to example(s) of the present disclosure described later.

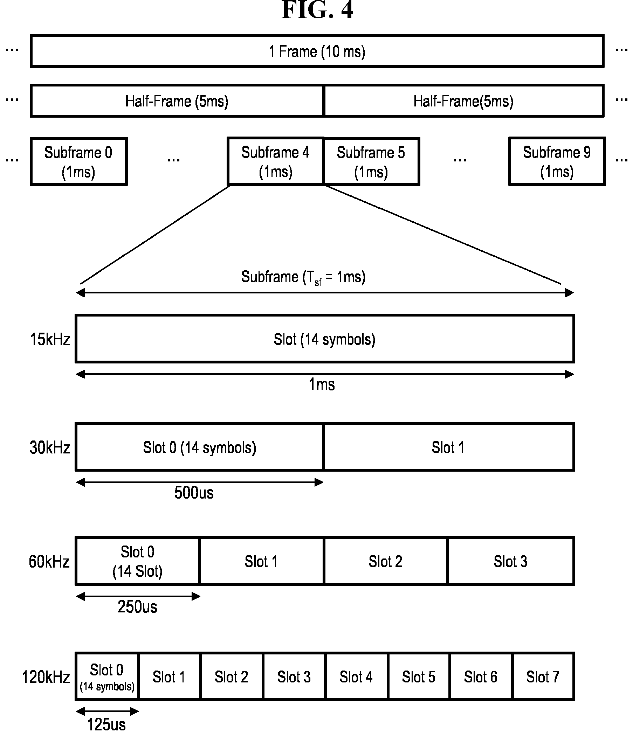

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (△fₘₐₓ*N_{f}/100)*T_{c} = 10 ms and is divided into two half-frames of 5 ms each. A basic time unit for NR is T_{c} = 1/(△fₘₐₓ*N_{f}) where △fₘₐₓ = 480*10³ Hz and N_{f} = 4096. For reference, a basic time unit for LTE is Tₛ = 1/(△f_{ref}*N_{f,ref}) where △f_{ref} = 15*10³ Hz and N_{f,ref} = 2048. T_{c} and T_{f} have the relationship of a constant κ = T_{c}/T_{f} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframe.

**Table 1**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing △f = 2^{u}*15 kHz.

**Table 2**

| *u* | *N*^{slot}_{symb} | *N*^{frame,u}ₛₗₒₜ | *N*^{subftame,u}ₛₗₒₜ |
|---|---|---|---|
| 2 | 12 | 40 | 4 |

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

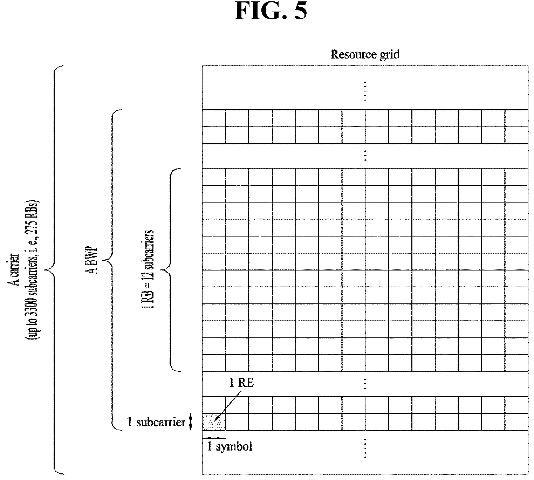

FIG. 5 illustrates a resource grid of a slot.

The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and N^{subframe,u}_{symb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u,* and a transmission link (DL or UL). The carrier bandwidth *N*^{size,u}_{grid} for the subcarrier spacing configuration *u* is given to the UE by a higher layer parameter (e.g. RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration *u.* The center of subcarrier 0 of CRB 0 for the subcarrier spacing configuration u is equal to 'Point A' which serves as a common reference point for RB grids. The PRBs are defined within a bandwidth part (BWP) and numbered from 0 to *N*^{size}_{BWP,i}-1, where i is a number of the BWP. The relation between a PRB n_{PRB} in a BWP i and a CRB n_{CRB} is given by: n_{PRB} = n_{CRB} + *N*^{size}_{BWP,i}, where *N*^{size}_{BWP,i} is a CRB in which the BWP starts relative to CRB 0. The BWP includes a plurality of consecutive RBs in the frequency domain. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

The PDCCH is transmitted through a control resource set (CORESET). One or more CORESETs may be configured for a UE. The CORESET is determined based on the following parameters.
- *controlResourceSetId:* ID of CORESET.
- *frequencyDomainResources:* Frequency domain resources of CORESET. The frequency domain resources of the CORESET are indicated through a bitmap, and each bit corresponds to an RB group (six consecutive RBs). For example, the most significant bit (MSB) of the bitmap corresponds to a first RB group in a BWP. The RB group corresponding to a bit having a bit value of 1 is allocated to a frequency domain resource of the CORESET.
- *duration:* Time domain resources of CORESET. The time domain resources of the CORESET represents the number of consecutive OFDMA symbols that constitute the CORESET. For example, the duration has a value from 1 to 3.
- *cce-REG-MappingType*: CCE-to-REG mapping type. An inerleaved type and a non-interleaved type are supported.
- *precoderGranularity*: Precoder granularity in the frequency domain.
- *tci-StatesPDCCH:* Information indicating a transmission configuration indication (TCI) state for a PDCCH (e.g., TCI-StateID). The TCI state is used to provide a quasi-co-location (QCL) relationship between DL RS(s) and PDCCH DMRS ports within an RS set (TCI-state).
- *tci-PresentInDCI*: Whether a TCI field is included in the DCI.
- *pdcch-DMRS-ScramblingID:* Information used to initialize a PDCCH DMRS scrambling sequence.

A CORESET, which is a set of time-frequency resources on which the UE is capable of monitoring a PDCCH, may be defined and/or configured. The UE may be configured with one or more CORESETs. The CORESET has a time duration of one to three OFDM symbols and includes a set of PRBs. The PRBs included in the CORESET and the CORESET duration may be provided to the UE through higher layer (e.g., RRC) signaling. The UE may monitor a set of PDCCH candidates in configured CORESET(s) according to corresponding search space sets. In the present disclosure, monitoring implies decoding (blind decoding) of each PDCCH candidate based on monitored DCI formats. The MIB on a PBCH provides the UE with parameters (e.g., CORESET #0 configuration) for monitoring a PDCCH that schedules a PDSCH carrying SIB1. The PBCH may indicate that there is no associated SIB1. In this case, the UE may be provided with not only a frequency range where the UE is allowed to assume that there is no SSB associated with SSB1 but also may be provided with another frequency range where the UE is allowed to discover an SSB associated with SIB1. CORESET #0, which is a CORESET for scheduling at least SIB1, may be configured through the MIB or dedicated RRC signaling.

The set of the PDCCH candidates that the UE monitors is defined in terms of PDCCH search space sets. The search space sets may be common search space (CSS) sets or UE-specific search space (USS) sets. Each CORESET configuration is associated with one or more search space sets and each search space set is associated with one CORESET configuration. A search space set is determined based on the following parameters provided to the UE by the BS.
- *serachSpaceId:* SS set identifier that identifies an SS set.
- *controlResourceSetId:* Identifier that identifies the CORESET related to the search space.
- *monitoringSlotPeriodicityAndOffset:* PDCCH monitoring periodicity and PDCCH monitoring offset to configure slots for PDCCH monitoring.
- *duration:* The number of consecutive slots that last in a search space at each occasion, i.e., at each period, as given by *monitoringSlotPeriodicityAndOffset.*
- *monitoringSymbolsWithinSlot:* a PDCCH monitoring pattern within a slot, indicating first symbol(s) of the CORESET within a slot for PDCCH monitoring.
- *nrofCandidates*: a number of PDCCH candidates per CCE aggregation level.

A UE monitors PDCCH candidates in PDCCH monitoring occasions only. The UE determines a PDCCH monitoring occasion from the PDCCH monitoring periodicity, the PDCCH monitoring offset, and the PDCCH monitoring pattern within a slot. The parameter *monitoringSymbolsWithinSlot* may indicate the first symbol(s) for PDCCH monitoring in the slots configured for PDCCH monitoring (e.g., see *monitoringSlotPeriodicityAndOffset* and *duration*). For example, when *monitoringSymbolsWithinSlot* is a 14-bit parameter, the most significant (leftmost) bit may represent the first OFDM symbol in the slot, and the second most significant (leftmost) bit may represent the second OFDM symbol in the slot. In this way, the bits of *monitoringSymbolsWithinSlot* may represent the 14 OFDM symbols of the slot, respectively. For example, bit(s) set to 1 among the bits in *monitoringSymbolsWithinSlot* may identify the first symbol(s) of the CORESET in the slot.

The following table illustrates search space sets and related RNTIs thereof, along with usage examples.

**Table 4**

| Search Space | Type | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI(s) | |
| UE Specific | UE Specific | C-RNTI, MCS-C-RNTI or CS-RNTI(s) | User specific PDSCH decoding |

The following table shows DCI formats carried by a PDCCH.

**Table 5**

| **DCI format** | **Usage** |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH. For a CSS, DCI format 0_0 and DCI format 1_0 have fixed sizes after the BWP size is initially given by RRC. For a USS, DCI format 0_0 and DCI format 1_0 are fixed in size in fields other than a frequency domain resource assignment (FDRA) field, and the FDRA field may vary in size by configuration of a related parameter by the BS. In DCI format 0_1 and DCI format 1_1, the size of the DCI field may be changed by various RRC reconfigurations by the BS. DCI format 2_0 may be used to transfer dynamic slot format information (e.g., SFI DCI) to the UE, and DCI format 2_1 may be used to transfer downlink pre-emption information to the UE. DCI format 2_0 and/or DCI format 2_1 may be transferred to UEs within a corresponding group via a group common PDCCH, which is a PDCCH transferred to UEs defined as one group.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port. The PDSCH may be dynamically scheduled by the PDCCH (dynamic scheduling) or semi-statically scheduled based on higher layer (e.g., RRC) signaling (and/or Layer 1 (L1) signaling (e.g., PDCCH)) (Configured Scheduling (CS)). Therefore, in dynamic scheduling, PDSCH transmission is accompanied by the PDCCH, but in the CS, PDSCH transmission is not accompanied by the PDCCH. The CS includes semi-persistent scheduling (SPS).

A PUCCH is a physical layer UL channel for uplink control information (UCI) transmission. The PUCCH carries UCI. The UCI includes the following information.
- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CRI), an SS/PBCH resource block indicator (SSBRI), and a layer indicator (L1). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2.

In the present disclosure, for convenience, PUCCH resources configured/indicated for/to the UE by the BS for HARQ-ACK, SR, and CSI transmission are referred to as an HARQ-ACK PUCCH resource, an SR PUCCH resource, and a CSI PUCCH resource, respectively.

PUCCH formats may be defined as follows according to UCI payload sizes and/or transmission lengths (e.g., the number of symbols included in PUCCH resources). In regard to the PUCCH formats, reference may also be made to Table 6.
(0) PUCCH format 0 (PF0 or F0)
   - Supported UCI payload size: up to K bits (e.g., K=2)
   - Number of OFDM symbols constituting a single PUCCH: 1 to X symbols (e.g., X=2)
   - Transmission structure: Only a UCI signal without a DMRS is included in PUCCH format 0. The UE transmits a UCI state by selecting and transmitting one of a plurality of sequences. For example, the UE transmits specific UCI to the BS by transmitting one of a plurality of sequences through a PUCCH, which is PUCCH format 0. The UE transmits the PUCCH, which is PUCCH format 0, in PUCCH resources for a corresponding SR configuration only upon transmitting a positive SR.
   - Configuration for PUCCH format 0 includes the following parameters for a corresponding PUCCH resource: an index for initial cyclic shift, the number of symbols for PUCCH transmission, and/or the first symbol for PUCCH transmission.
(1) PUCCH format 1 (PF1 or F1)
   - Supported UCI payload size: up to K bits (e.g., K=2)
   - Number of OFDM symbols constituting a single PUCCH: Y to Z symbols (e.g., Y=4 and Z=14)
   - Transmission structure: The DMRS and UCI are configured/mapped in TDM in/to different OFDM symbols. In other words, the DMRS is transmitted in symbols in which modulation symbols are not transmitted and the UCI is represented as the product between a specific sequence (e.g., orthogonal cover code (OCC)) and a modulation (e.g., QPSK) symbol. Code division multiplexing (CDM) is supported between a plurality of PUCCH resources (conforming to PUCCH format 1) (within the same RB) by applying cyclic shifts (CSs)/OCCs to both the UCI and the DMRS. PUCCH format 1 carries the UCI of up to 2 bits and the modulation symbols are spread by the OCC (differently configured depending on whether frequency hopping is performed) in the time domain.
   - Configuration for PUCCH format 1 includes the following parameters for a corresponding PUCCH resource: an index for initial cyclic shift, the number of symbols for PUCCH transmission, the first symbol for PUCCH transmission, and/or an index for the OCC.
(2) PUCCH format 2 (PF2 or F2)
   - Supported UCI payload size: more than K bits (e.g., K=2)
   - Number of OFDM symbols constituting a single PUCCH: 1 to X symbols (e.g., X=2)
   - Transmission structure: The DMRS and UCI are configured/mapped using frequency division multiplexing (FDM) within the same symbol. The UE transmits the UCI by applying only IFFT without DFT to encoded UCI bits. PUCCH format 2 carries UCI of a larger bit size than K bits and modulation symbols are subjected to FDM with the DMRS, for transmission. For example, the DMRS is located in symbol indexes #1, #4, #7, and #10 within a given RB with the density of 1/3. A pseudo noise (PN) sequence is used for a DMRS sequence. Frequency hopping may be activated for 2-symbol PUCCH format 2.
   - Configuration for PUCCH format 2 includes the following parameters for a corresponding PUCCH resource: the number of PRBs, the number of symbols for PUCCH transmission, and/or the first symbol for PUCCH transmission.
(3) PUCCH format 3 (PF3 or F3)
   - Supported UCI payload size: more than K bits (e.g., K=2)
   - Number of OFDM symbols constituting a single PUCCH: Y to Z symbols (e.g., Y=4 and Z=14)
   - Transmission structure: The DMRS and UCI are configured/mapped in TDM for/to different OFDM symbols. The UE transmits the UCI by applying DFT to encoded UCI bits. PUCCH format 3 does not support UE multiplexing for the same time-frequency resource (e.g., same PRB).

Configuration for PUCCH format 3 includes the following parameters for a corresponding PUCCH resource: the number of PRBs, the number of symbols for PUCCH transmission, and/or the first symbol for PUCCH transmission.

### (4) PUCCH format 4 (PF4 or F4)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. PUCCH format 4 may multiplex up to 4 UEs in the same PRB, by applying an OCC at the front end of DFT and applying a CS (or interleaved FDM (IFDM) mapping) to the DMRS. In other words, modulation symbols of the UCI are subjected to TDM with the DMRS, for transmission.
- Configuration for PUCCH format 4 includes the following parameters for a corresponding PUCCH resource: the number of symbols for PUCCH transmission, length for the OCC, an index for the OCC, and the first symbol for PUCCH transmission.

The table below shows the PUCCH formats. The PUCCH formats may be divided into short PUCCH formats (formats 0 and 2) and long PUCCH formats (formats 1, 3, and 4) according to PUCCH transmission length.

**Table 6**

| PUCCH format | Length in OFDM symbols N^{PUCCH}_{symb} | Number of bits | Usage | Etc. |
|---|---|---|---|---|
| 0 | 1-2 | =<2 | HARQ, SR | Sequence selection |
| 1 | 4-14 | =<2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM(no UE multiplexing) |
| 4 | 4-14 | >2 | HARQ, CSI, [SR] | DFT-s-OFDM(Pre DFT OCC) |

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, N_{UCI}.
- PUCCH resource set #0, if the number of UCI bits =< 2
- PUCCH resource set #1, if 2< the number of UCI bits =< N₁
- PUCCH resource set #(K-1), if N_{K-2} < the number of UCI bits =< N_{K-1}

Here, K represents the number of PUCCH resource sets (K>1) and Nᵢ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4.

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

The PUSCH carries UL data (e.g., UL-SCH TB) and/or UL control information (UCI) and is transmitted based on a cyclic prefix-orthogonal frequency division multiplexing (CP-OFDM) waveform or a discrete Fourier transform-spread-OFDM (DFT-s-OFDM) waveform. When the PUSCH is transmitted based on the DFT-s-OFDM waveform, the UE transmits the PUSCH by applying transform precoding. For example, when transform precoding is disabled, the UE may transmit the PUSCH based on the CP-OFDM waveform, and when transform precoding is enabled, the UE may transmit the PUSCH based on the CP-OFDM waveform or the DFT-s-OFDM waveform. The PUSCH may be dynamically scheduled by the PDCCH (dynamic scheduling) or semi-statically scheduled based on higher layer (e.g., RRC) signaling (and/or Layer 1 (L1) signaling (e.g., PDCCH)) (Configured Scheduling (CS)). Therefore, in dynamic scheduling, PUSCH transmission is accompanied by the PDCCH, but in the CS, PUSCH transmission is not accompanied by the PDCCH. The CS includes Type-1 configured grant (CG) PUSCH transmission and Type-2 CG PUSCH transmission. In the Type-1 CG, all parameters for PUSCH transmission are signaled via a higher layer. In the Type-2 CG, some of the parameters for PUSCH transmission are signaled via a higher layer and the remaining parameters are signaled by the PDCCH. Basically, in the CS, PUSCH transmission is not accompanied by the PDCCH.

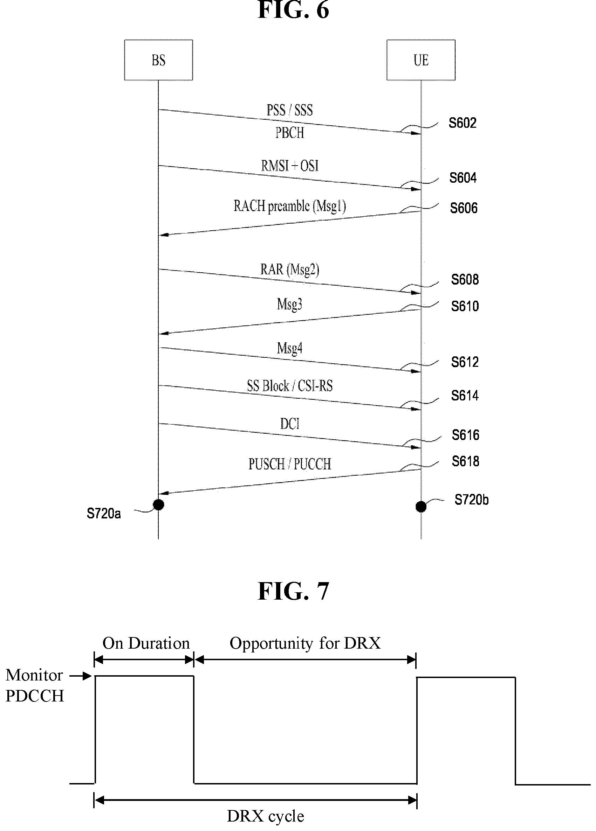

FIG. 6 illustrates a network communication process for performing implementation(s) of the present disclosure. In detail, FIG. 6 illustrates an initial network connection and subsequent communication processes.

The UE may perform a network communication process for performing procedures and/or methods described in the present disclosure. For example, the UE may receive and store, in a memory system, information and configuration information necessary to perform the procedures and/or methods described in the present disclosure while performing an access to a network (e.g., a BS). The configuration information required to perform implementation(s) according to the present disclosure may be received via higher layer (e.g., RRC layer or MAC layer) signaling.

In the NR, a physical channel and a reference signal may be transmitted using beamforming. When beam-forming based signal transmission is supported, a beam management process may be involved to align beams between the BS and the UE. In the present disclosure, signals may be transmitted/received using beamforming. In a radio resource control (RRC)_DLE mode, beam alignment may be performed based on SSB. On the other hand, in an RRC_ONNECTED mode, beam alignment may be performed based on CSI-RS (in DL) and SRS (in UL). When beamforming-based signal transmission is not supported, a beam-related operation may be omitted in the description below.

Referring to FIG. 6, the BS may transmit the SSB periodically (S602). Here, the SSB includes PSS/SSS/PBCH. The SSB may be transmitted using beam sweeping. Then, the BS may transmit remaining minimum system information (RMSI) and other system information (OSI) (S604). The RMSI may include information required for the UE to initially access the BS (e.g., PRACH configuration information). The UE performs SSB detection and then identifies the best SSB. Then, the UE may transmit a RACH preamble (Msg1) to the BS by using a PRACH resource linked/corresponding to an index (i.e., beam) of the best SSB (S606). A beam direction of the RACH preamble is related to the PRACH resource. The association between the PRACH resource (and/or RACH preamble) and SSB (index) may be established via system information (e.g., RMSI). Then, as a part of the RACH process, the BS may transmit a random access response (RAR) (Msg2) in response to the RACH preamble (S608), the UE may transmit Msg3 (e.g., RRC connection request) by using the UL grant in the RAR (S610), and the BS may transmit a contention resolution message (Msg4) (S620). Msg4 may include RRC connection setup.

When the RRC connection is established between the BS and the UE through the RACH process, subsequent beam alignment may be performed based on SSB/CSI-RS (in DL) and SRS (in UL). For example, the UE may receive the SSB/CSI-RS (S614). The SSB/CSI-RS may be used by the UE to generate a beam/CSI report. The BS may request the beam/CSI report from the UE through DCI (S616). In this case, the UE may generate the beam/CSI report based on the SSB/CSI-RS and transmit the generated beam/CSI report to the BS through the PUSCH/PUCCH (S618). The beam/CSI report may include a beam measurement result, and information about a preferred beam. The BS and the UE may switch a beam based on the beam/CSI report (S620a and S620b).

Then, the BS and the UE may perform the procedures and/or methods described in the present disclosure. For example, the UE and the BS may process information in the memory and transmit a wireless signal or process a received wireless signal and store the signal in the memory based on configuration information obtained during a network access process (e.g., a system information obtaining process or an RRC connection process via RACH) according to the proposal of the present disclosure. Here, the wireless signal may include at least one of the PDCCH, the PDSCH, and the reference signal (RS) for DL, and at least one of the PUCCH, the PUSCH, and the SRS for UL.

FIG. 7 illustrates a discontinuous reception (DRX) operation. In particular, FIG. 7 illustrates a DRX cycle for a UE in an RRC_CONNECTED state.

The UE may perform the DRX operation while performing a process and/or method according to some implementations of the present disclosure. A UE configured with the DRX may reduce power consumption by receiving a DL signal discontinuously. The DRX operation may be performed in an RRC_IDLE state, an RRC_INACTIVE state, and an RRC_CONNECTED state. In the RRC_IDLE and RRC_INACTIVE states, the DRX is used to discontinuously receive a paging signal. Hereinafter, DRX performed in RRC_CONNECTED state (RRC_CONNECTED DRX) is described.

Referring to FIG. 7, a DRX cycle is configured with an ON duration and an opportunity for DRX. The DRX cycle defines a time interval over which the ON duration is repeated periodically. The ON duration represents a time duration in which the UE monitors to receive the PDCCH. When the DRX is configured, the UE performs PDCCH monitoring during the ON duration. When the PDCCH is successfully detected while monitoring the PDCCH, the UE starts an inactivity timer and maintains the timer in an awake state. On the other hand, when no PDCCH is successfully detected while monitoring the PDCCH, the UE enters a sleep state after the ON duration ends. Therefore, when the DRX is configured, PDCCH monitoring/reception may be performed discontinuously in the time domain when performing methods and/or procedures according to some implementations of the present disclosure. For example, when the DRX is configured, the PDCCH reception occasion (e.g., slot having PDCCH search space) may be configured discontinuously according to the DRX configuration. On the other hand, when the DRX is not configured, PDCCH monitoring/reception may be performed continuously in the time domain when performing methods and/or procedures according to some implementations of the present disclosure. For example, when the DRX is not configured, the PDCCH reception opportunity (e.g., slot having PDCCH search space) may be configured consecutively. PDCCH monitoring may be limited during the time duration configured as a measurement gap regardless of whether the DRX is configured.

The following table shows a UE process related to the DRX. Referring to the table below, DRX configuration information is received via higher layer (e.g. RRC) signaling, and whether the DRX is turned on/off is controlled by a DRX command of the MAC layer. When the DRX is configured, the UE may perform PDCCH monitoring discontinuously as illustrated in FIG. 7.

**Table 7**

| | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following parameter information to define the DRX.
- *drx-OnDurationTimer:* The length of a start duration of the DRX cycle, also called the ON duration timer in the present disclosure
- *drx-SlotOffset:* Delay indication for slot before *drx-OnDurationTimer* starts
- *drx-StartOffset:* Specifies a subframe in which the DRX cycle starts
- *drx-InactivityTimer:* The length of the time duration in which the UE remains awake after a PDCCH opportunity is detected indicating initial UL or DL data, also called the inactivity timer in the present disclosure.
- *drx-HARQ-RTT-TimerDL*: The maximum time duration between reception of DL initial transmission and reception of DL retransmission
- *drx-HARQ-RTT-TimerDL*: The maximum time duration between reception of grant for UL initial transmission and reception of grant for UL retransmission
- drx-RetransmissionTimerDL(per DL HARQ process): The length of the maximum time duration until DL retransmission is received
- drx-RetransmissionTimerUL(per UL HARQ process): The length of the maximum time duration until a grant for UL retransmission is received
- *drx-LongCycleStartOffset:* Time length and starting point of the DRX cycle
- *drx-ShortCycle* (optional): Time length of short DRX cycle
- *drx-ShortCycleTimer* (optional): Short DRX cycle operation occasion

For example, a value in multiples of the short DRX cycle may be configured by drx-CycleTimer. For example, the value of n may correspond to n*drx-ShortCycle.

The UE may perform PDCCH monitoring on serving cells within a DRX group if the DRX group is within the active time. In this case, the DRX group refers to a group of serving cells that are configured by RRC and have the same DRX active time. When DRX is configured, the Active Time for serving Cells in a DRX group includes the time while i) drx-onDurationTimer or drx-InactivityTimer configured for the DRX group is running, or ii) drx-RetransmissionTimerDL or drx-RetransmissionTimerUL is running on any serving Cell in the DRX group; or ra-ContentionResoultionTimer or msgB-RsponseWindow is running; or a PDCCH indicating a new transmission addressed to the C-RNTI of a MAC entity of the UE has not been received after successful reception of a random access response for the Random Access Preamble not selected by the MAC entity among the contention-based random access preambles.

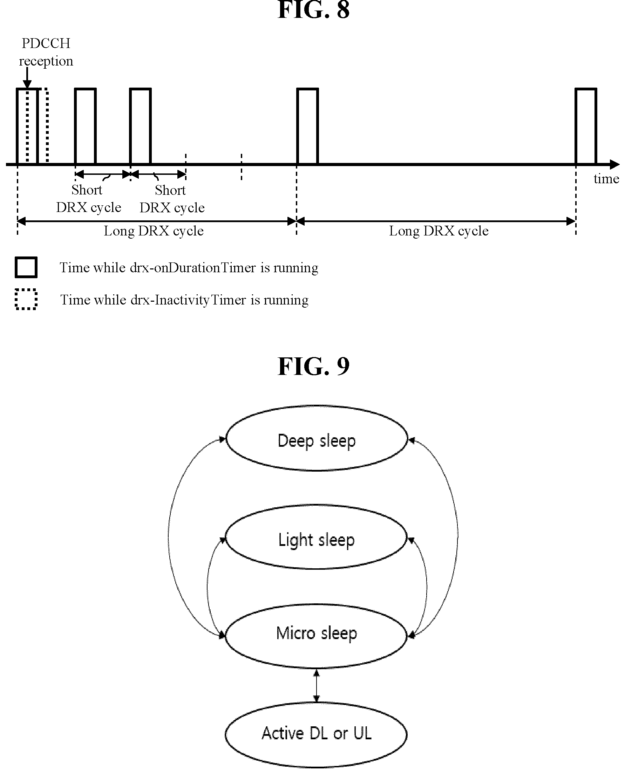

FIG. 8 illustrates a case in which a long DRX cycle and a short DRX cycle are configured. Specifically, FIG. 8 shows a case in which drx-ShortCycleTimer is set to 2.

The BS may configure a long DRX cycle and an additional short DRX cycle, which is shorter than the long DRX cycle. If no short DRX cycle is configured, the UE may follow the long DRX cycle. When configuring the short DRX cycle, the BS may set the duration of the long DRX cycle to be a positive integer multiple of the short DRX cycle. If there is no data activity during the on-duration of the long DRX cycle, the UE may follow the long DRX cycle as if no short DRX cycle is configured. If there is data activity during the on-duration of the long DRX cycle, for example, while drx-onDurationTimer is running, the UE switches to the short DRX cycle and follows the short DRX cycle for a certain period of time (e.g., while drx-ShortCycleTimer is running). Referring to FIG. 8, if there is no data activity during the time that the UE follows the short DRX cycle, for example, if there is no data activity during the period defined by drx-ShortCycleTimer * drx-ShortCycle, the UE switches from short DRX cycles each having the duration by drx-ShortCycleTimer to the long DRX cycle.

It is reported that power consumed by an NR BS is 3 to 4 times higher than power consumed by an LTE BS due to denser BS installation and use of more antennas/bandwidth/frequency bands, or the like, compared to an LTE system. To resolve the problem of increased operating costs for operators and establish an eco-friendly network, a study item is approved to discuss methods to reduce energy consumption of the BS.

In detail, the following enhancement techniques are considered to improve the energy saving capability of the BS in terms of transmission and reception in the corresponding item.
- How to more efficiently apply one or more network energy saving (NES) techniques in time, frequency, space and power domains for dynamically and/or semi-statically operation and finer granularity adaptation in transmission and reception based on UE assistance information and potential support/feedback from the UE.

FIG. 9 illustrates network energy saving (NES) according to the present disclosure.

3GPP RAN WG1 defines an energy consumption model and simulation methodology for the BS to show that energy consumption gains are to be obtained by applying NES technology. In detail, referring to FIG. 9, a sleep state and active state of the BS are defined and a transition method for each state is determined. A relative power value consumed by the BS in each state, a time required for state transition, and energy are modeled. In a sleep state, the BS neither transmits nor receives. In an active state, the BS performs transmission and/or reception.

The technologies discussed in 3GPP RAN WG1 for NES may be divided into four domains (time, frequency, space, and power domains) as shown in the following table, and specific technologies for each domain are as shown in the following table.

A method of controlling turning on and off a UE-common signal (e.g., SSB, SIB, or paging) or UE-specific signal (e.g., CSI-RS) using time-domain NES techniques, a method of transmitting a wake-up signal from a UE to wake up a BS in an inactive state, and a method of controlling transmission/reception of a UE according to a DTX/DRX pattern of a BS are discussed.

As frequency-domain NES techniques, a method of switching an SCell and a bandwidth part (BWP) or controlling a bandwidth of the BWP without a synchronization signal block (SSB) in inter-band CA situations is discussed.

As space-domain NES techniques, a method of supporting on/off operations per antenna port or per transmission and reception point (TRP) of a BS and improving associated CSI measurements and reporting is discussed.

As power-domain NES techniques, a method of dynamically changing power of DL (e.g., SSB, CSI-RS, or PDSCH), a method of compensating digital distortion of a BS or a UE, and a method of increasing transmission efficiency by maximizing power amplifier (PA) efficiency by applying a tone reservation scheme are discussed.

**Table 8**

| **Time domain techniques** |
|---|
| Adaptation of common signals and channels |
| Dynamic adaptation of UE specific signals and channels |
| Wake up of gNB triggered by UE wake up signal |
| Adaptation of DTX/DRX |
| Adaptation of SSB/SIB1 |

| **Frequency domain techniques** |
|---|
| Multi-carrier energy saving enhancements |
| Dynamic adaptation of bandwidth part of UE(s) within a carrier |
| Dynamic adaptation of bandwidth of active BWP |

| **Spatial domain techniques** |
|---|
| Dynamic adaptation of spatial elements |
| TRP muting/adaptation in multi-TRP operation |

| **Power domain techniques** |
|---|
| Adaptation of transmission power of signals and channels |
| Enhancements to assist gNB digital pre-distortion |
| Adaptation of transceiver processing algorithm |
| PA backoff adaptation |
| UE post-distortion |

Except for the technologies commonly discussed in 3GPP RAN WG1 and 3GPP RAN WG2, NES technologies discussed in the 3GPP RAN WG2 include a method for NES-capable UEs or existing NR UEs to access an NES cell, and an efficient handover method for UEs accessing NES cells.

After the UE initially connects to the BS and enters a connected mode, the UE may continuously monitor the PDCCH to check if there is a transmission scheduled for the UE in each configured search space (SS). However, if this scheduling is not always present, a battery of the UE may be quickly drained due to unnecessary PDCCH monitoring every time. Therefore, the BS may configure connected mode discontinuous reception (C-DRX) to obtain a power saving effect of the UE by configuring a time duration (ON duration) during which PDCCH monitoring is performed and a duration (OFF duration) during which PDCCH monitoring is not performed. The UE performs PDCCH monitoring in periodically configured ON duration to check if there is DL/UL to receive/transmit, and when a PDCCH is received, the UE performs DL reception or UL transmission as instructed. In the case of UL of the UE, regardless of C-DRX, when there is data to be transmitted in a UL buffer, the UE may wake up from a sleep mode and transmit SR, and in the case of a UE in an idle mode, the UE may operate in idle mode DRX (I-DRX) that periodically performs paging monitoring and enters sleep again if the UE is not a target UE. In the present disclosure, a UE operating in a sleep mode may mean that the UE operates regardless of an active time determined by C-DRX or that the UE operates in a period other than the active time determined by C-DRX. In a C-DRX operation, a time duration configured as ON and OFF durations is repeated, which is called a DRX cycle, a length of the DRX cycle is defined as a time from a starting point of the ON duration to a starting point of a next ON duration, and there are a long DRX cycle and a short DRX cycle. When a length of the DRX cycle increases, the latency may increase because the BS needs to wait until the next ON duration of the UE when a PDSCH to be transmitted occurs immediately after an end of a specific ON duration of the UE. In terms of the BS, the UE does not transmit P-CSI or SRS during the OFF duration, and thus the resource may be allocated to another UE to increase resource utilization, and the BS may also operate in energy saving mode to save power during the OFF duration of the UE.

A long DRX cycle and a short DRX cycle may be configured simultaneously, and the long DRX cycle may be configured to be an integer multiple of the short DRX cycle. In this case, the On duration timer values of the long DRX cycle and the short DRX cycle may be equal to each other. If there is no data activity (e.g., PDCCH reception) during the ON period of the long DRX cycle, an operation may be performed in a long DRX cycle, if there is data activity, the operation may be performed in a short DRX cycle as long as the short DRX cycle timer (*drx-ShortCycleTimer*), and if there is no data activity during the ON duration of the short DRX cycle, switching may be performed back to the long DRX cycle. In this case, the start of the ON duration in a short DRX cycle is determined by the *drx-StartOffset* and *drx-SlotOffet* values, similar to a long DRX cycle.

In some scenarios, the BS may instruct the UE to enter a DRX sleep state directly without operating in an active mode until the end of the ON duration via the DRX command MAC control element (CE). That is, the current active time may be terminated and the DRX cycle may be entered directly. When only a long DRX cycle is configured for the UE, the UE operates in a long DRX cycle mode, and when a short DRX cycle is configured, the UE enters a short DRX cycle mode immediately after receiving a DRX command MAC CE. When the BS instructs the long DRX command MAC CE, the BS may operate in the long DRX cycle mode even if the short DRX cycle is configured.

The BS may adjust a starting point of a long DRX cycle through an RRC parameter *drx-LongCycleStartOffset.* In this case, an offset value may be defined in ms units such that a long DRX cycle may start at a slot boundary. The BS may configure a starting point of an ON duration as slot level granularity through an RRC parameter *drx-SlotOffset,* and a relative position of the ON duration may be defined by applying a slot offset indicated from a reference point indicated by *drx-LongCycleStartOffset.* The BS may align the ON and OFF durations of a plurality of UEs within a cell and utilize the aligned durations for an energy saving operation by adjusting the positions of a DRX cycle starting point and ON duration starting point through the parameter(s). According to some implementations of the present disclosure, it may be possible to dynamically indicate an offset value to save energy through dynamic transmit/receive OFF time patterns of the BS.

The UE may save energy by waking up from a sleep state only during the ON duration and monitoring a PDCCH through C-DRX configuration compared to continuously monitoring the PDCCH (e.g., every slot). When the BS has no data to transmit in an upcoming ON duration of the UE, the BS may further save a battery of the UE by transmitting a wake up signal (WUS) before the ON duration of the UE starts to inform the UE that there is no need to wake up from the sleep state during the ON duration. In some scenarios, the BS may transmit a WUS in DCI format 2_6 in a WUS occasion configured before an ON duration when there is no data to be transmitted/received in the upcoming ON duration to/from the UE(s) with C-DRX configured, indicating to the UE(s) that there is no need to wake up in the corresponding ON duration. Waking up from a sleep state means switching from a sleep state to an active state. A UE that receives a WUS indication may continue to remain in a sleep state without switching to an active mode, thereby increasing an energy saving effect.

However, in terms of the BS, the starting point of the DRX cycle and/or ON duration may be different for each UE, and thus even if the UE enters the sleep mode to save energy, the BS needs to wake up for each WUS occasion and then go back to sleep, and accordingly, the length of the sleep time may be shortened, reducing the energy saving effect. According to some implementations of the present disclosure, the BS may configure each UE(s) with WUS occasions that overlap. The BS may continuously configure WUS occasions for the UE(s). By doing so, the BS may obtain energy saving effects by transmitting WUS(s) as short as possible and ensuring a long sleep time. The BS may increase an ES effect by ensuring a long sleep time by not having to transmit a WUS in multiple WUS occasions by indicating ON/OFF in multiple ON durations through a single WUS (i.e., whether the UE needs to wake up in the ON duration).

In the present disclosure, energy saving methods and/or procedures of the BS and the UE are described. For example, methods and/or procedures for dynamically indicating DRX cycle and/or ON duration offset values to UE(s) configured with C-DRX are described. Methods and/or procedures for skipping an ON duration via a WUS are described. For example, methods and/or procedures for ON/OFF indication for an ON duration are described in relation to ON duration skipping via a WUS. Methods and/or procedures for dynamically switching a DRX parameter for NES are described. UE operation methods and/or procedures according to ON/OFF durations of UE-specific DRX and/or cell-specific DRX are described.

According to some implementations of the present disclosure, the BS operating in an NES mode for energy saving may mean, for example, that the BS operates in such a way that power consumption of the BS and the UE is reduced by configuring a plurality of OFF durations during which a specific DL signal is not pre-transmitted for a specific time duration and dynamically indicating one of the OFF durations to indicate that the corresponding DL signal is not be transmitted during a predefined time duration. In this case, the OFF duration may mean a discontinuous transmission (DTX) duration of the BS. When BWP switching, dynamic RB adaptation, or the like is performed in frequency domain as well as time domain and when a specific receive antenna port of the BS is turned off semi-statically or dynamically in spatial domain, this mean operating to obtain an effect of reducing power consumption of BS and UE by instructing the UE to turn off UL signal and/or channel or some TX antenna ports of a UL signal and/or channel that perform reception through that antenna port.

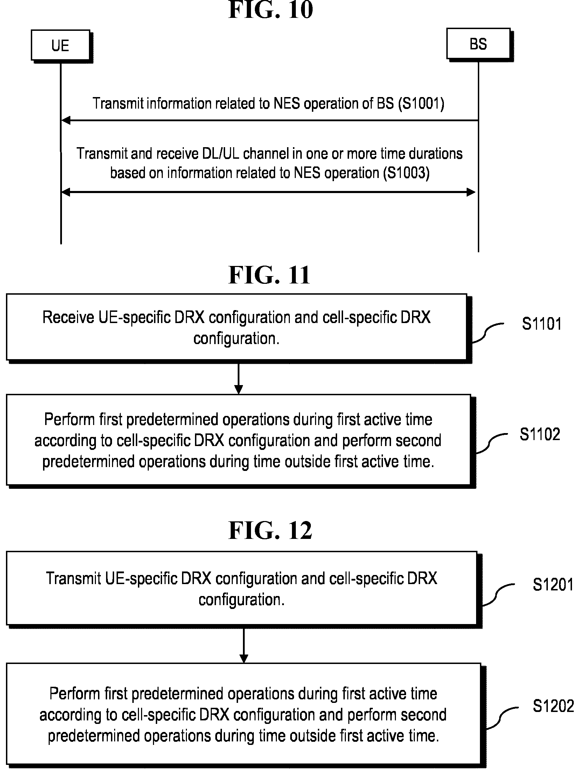

FIG. 10 illustrates a flow of an operation of a network according to some implementations of the present disclosure.

Referring to FIG. 10, the BS may transmit information related to an NES operation of the BS to the UE (S1001). The information related to the NES operation may be information related to ON/OFF for one or more time durations or information related to whether the BS operates in an NES mode. The information related to the NES operation may be information related to a period of DL/UL signals and/or channels depending on the NES mode. The BS may transmit the information related to the NES operation to the UE based on at least one of the DL signaling methods according to some implementations of the present disclosure.

The BS and the UE may transmit and/or receive DL/UL channels in one or more time durations based on the information related to the NES operation (S1003). The BS and the UE may transmit and/or receive DL/UL channels based on at least one of the DL signal transmission and/or reception methods according to some implementations of the present disclosure.

### <Implementation 1> Method in which a BS dynamically indicates an offset value of a starting point of a DRX cycle and/or an ON duration and how many DRX cycles the corresponding offset value is to be applied for (i.e., a time for which the offset value is maintained) through a signal in the form of a WUS before start of an ON duration, or through a UE-specific DCI or group common DCI (GC-DCI) during the ON duration

A separate UE-common DRX cycle for NES may be configured separately from a UE-specific DRX cycle configuration and an offset value and a duration of the offset value may be indicated, or a 1-bit indicator and a duration of the offset value may be indicated.

The starting point and/or length of the DRX cycle and/or ON duration of a single/multiple UE(s) may be aligned by configuring one or more candidates for the offset value of the starting point of the DRX cycle and/or ON duration or the duration of the offset value and the duration of the offset value through a higher layer signal (e.g., RRC), and indicating one of the candidates through a signal in the form of WUS before start of the ON duration, or through UE-specific DCI or GC-DCI within the ON duration, or dynamically indicating one of the candidates based on an identification number (hereinafter, ID) or C-RNTI of the UE.

In this case, the UE is informed of the number of UE groups (hereinafter, N) and N offsets to be applied to each group (or index of each group) through GC-DCI and/or MAC-CE, and determines a value obtained by calculating modulo-N of its own UE ID as an index of the group to which the UE belongs, and may also align the starting point and/or length of the DRX cycle and/or ON section by applying the offset configured to the corresponding group index.

When the UE has a paging group ID (a group ID of UE(s) that monitor the same paging occasion (PO)), the UE may be informed of an offset for each ID via (GC-)DCI and/or (GC-)MAC CE and may determine the starting point and/or length of the DRX cycle and/or ON duration by applying an offset configured for the paging group ID to which the UE belongs.

The ON duration(s) that are configured semi-statically may be dynamically shifted forward/backward through an offset indicated by the WUS and the duration of the offset.

In this case, one or more candidates for a combination of an offset value and a duration of the offset value, which may be indicated by a WUS, may be configured through a higher layer signal (e.g., RRC), and one of the candidates may be dynamically indicated through the WUS. The duration of the offset value refers to the number of DRX cycles for which the offset value is to be applied, or a specific time/time duration for which the offset is to be applied. For example, a combination of an offset value per DRX ON duration unit and a duration of the offset value per slot unit may be configured as a candidate. As another example, a combination of an offset value per DRX ON duration unit and a duration of the offset value in ms unit may be configured as a candidate.

In this case, an occasion location of the WUS corresponding to the corresponding ON duration may be determined in consideration of a degree of shift of the ON duration.

According to some implementations of the present disclosure, to address an issue of a UE missing DCI and/or MAC CE, a monitoring window may be configured, during which the UE attempts to detect the DCI and/or the MAC CE, and when detection fails, the UE may maintain a previous offset applied or apply an original/default offset. For example, when the UE does not receive/misses an offset instruction, the UE may apply the previously indicated offset value or apply an original/default offset value. A time point of applying an offset value may be indicated, via the DCI and/or the MAC CE, as an absolute time point (e.g., frame, subframe, slot index, or a combination thereof) or a relative time point (e.g., X ms after a time point where an offset is indicated, or Y slots after the time point where the offset is indicated) based on a time point where the offset is indicated (i.e., a time point where the DCI and/or the MAC CE is received). Conversely, the issue of missing DCI and/or MAC CE may be prevented by transmitting a WUS periodically/continuously and entering a sleep mode when the WUS is not detected in a specific WUS occasion. When the duration of the dynamically indicated offset value in the methods expires, the UE may automatically return to the original/default offset value or continue to maintain the indicated offset value until receiving a separate indication.

In detail, the UE may variously be configured the DRX cycle and/or a starting point of the ON duration for configuring the DRX cycle, according to the C-DRX configuration. In terms of the BS, transmission/reception scheduling needs to be performed for each UE in a cell according to the ON duration, and thus the BS may not switch to a sleep mode during the combined time of the ON durations of the UEs and needs to maintain an active mode. For example, when the ON duration of a first UE with DRX configured (also called a DRX ON duration) is configured from slot 0 to slot 5 and the ON duration of a second UE with DRX configured is configured from slot 6 to slot 10, the BS may need to maintain the active mode for the combined ON durations of the two UEs, i.e., from slot 0 to slot 10. Periodic transmission may be required for certain service traffic (e.g., XR traffic). Therefore, it may be advantageous in terms of transmission efficiency and energy saving of the BS to align and transmit the ON durations of a plurality of UEs (also called UE groups) through offsets according to a traffic period.

According to some implementations of the present disclosure, the BS may perform transmissions to a plurality of UEs in a relatively short period of time by aligning and configuring the starting points of DRX cycles and/or ON durations of the plurality of UEs through the DRX cycle and/or ON duration offsets in terms of energy saving. Aligning the starting points of the DRX cycles and/or ON durations of the plurality of UEs may mean fully overlapping or aligning the DRX cycles and/or ON durations of the plurality of UEs or may mean partially overlapping or aligning the DRX cycles and/or ON durations of the plurality of UEs. Then, energy may be saved by switching to a sleep mode according to an inactive time of the UEs. In this case, it may be difficult to quickly change an offset value for a traffic situation or energy saving by using semi-static offset adjustment through the existing RRC parameter *drx-LongCycleStartOffset* or *drx-SlotOffset,* and thus the offset value and the duration of the offset value (e.g., the number of DRX cycles for which the indicated offset value is to be maintained) may be dynamically indicated through a signal in the form of WUS or UE-specific DCI or GC-DCI, taking into account the latency and flexibility aspects.

The BS may separately configure a UE-common DRX cycle for NES apart from the UE-specific DRX cycle configuration and indicate an offset value and a duration of the offset value through the UE-specific DCI or GC-DCI, or indicate a 1-bit indicator and the duration of the offset value. In this case, while the offset value is indicated, the duration of the offset value regarding the number of DRX cycles for which the corresponding offset value is to be applied or whether the corresponding offset value is to be applied during a certain time/time duration may also be indicated.

The starting point and/or length of the DRX cycle and/or ON duration may be aligned by configuring one or more candidates for the offset value of the starting point of the DRX cycle and/or ON duration or a combination of the offset value and the duration of the offset value through a higher layer signal (e.g., RRC), and indicating one of the candidates through a signal in the form of WUS before start of the ON duration, or through UE-specific DCI or GC-DCI within the ON duration, or dynamically indicating one of the candidates based on an ID or C-RNTI of the UE. In this case, the UE is informed of the number of UE groups (hereinafter, N) and N offsets to be applied to each group (or index of each group) through (GC-)DCI and/or (GC-)MAC CE, and determines a value obtained by calculating modulo-N of its own UE ID as an index of the group to which the UE belongs, and may also align the starting point and/or length of the DRX cycle and/or ON duration by applying the offset configured to the corresponding group index. Alternatively, when the UE has a paging group ID (a group of IDs of UEs monitoring the same PO), the UE may be indicated with an offset for each ID via (GC-)DCI or (GC-)MAC CE and may determine a starting point of the DRX cycle and/or ON duration by applying an offset configured for a paging group ID to which the UE belongs.

The ON duration(s) configured semi-statically may be dynamically shifted forward/backward through the offset value and a duration of the offset value, which are indicated by a WUS. In this case, the offset value and the duration of the offset value for how long the offset value is to be maintained may be pre-configured through a higher layer signal (e.g., RRC) as one or more states in which the two values are combined, and one of them may be dynamically indicated using a WUS. For example, candidate(s) for a combination of a offset value and the duration for which the offset values are to be maintained (a number of DRX cycles or a specific time/time interval for which the offset is to be applied) may be configured. In this case, the offset value may be configured in units of DRX ON durations configured for the UE (e.g., 1 ON duration, 2 ON durations, ..., infinite), and the duration of the offset value may be configured in units of slots or a certain time (e.g., ms). The duration of the offset value may also be pre-configured as the number of DRX cycles for which the offset value is maintained, i.e. the number of DRX cycles to be maintained (e.g. 2 DRX cycles, 3 DRX cycles, ..., infinite). One or more candidate states that are combinations of these two values may be pre-configured. In this case, infinite may mean maintaining a value indicated by the existing WUS unless another offset value and a duration of the offset value are indicated through a separate WUS indication.

When indicating ON/OFF of an ON duration through a WUS, an interval between a WUS occasion and the ON duration may be configured by considering a processing time required for the UE to turn ON/OFF an upcoming ON duration according to the indication after receiving the WUS. Therefore, when an offset value for adjusting a starting time of the ON duration of the UE, and a duration of the offset value are dynamically indicated through a WUS before the ON duration, the location of the WUS occasion may also dynamically change depending on a timeline between the WUS and the ON duration and a range to which the ON duration is to be shifted. That is, the ON duration(s) that are configured semi-statically may be shifted dynamically forward/backward through the offset indicated by a WUS, and thus the location of the WUS occasion may also be shifted according to a range of movement (shift) of the ON duration to be moved through the offset based on the location of an initially configured ON duration. When the BS configures candidate(s) (e.g., ON duration units of DRX) of offset values (of the ON duration), which may be indicated by the WUS, through higher layer signaling (e.g., RRC), a WUS may also be expected to be transmitted at a location which is shifted by a value from a WUS occasion, where the value is one that may shift the WUS occasion the farthest from among the configured candidate(s) of offset values (also called maximum shift value). For example, when the offset value for moving the ON duration forward by two ON duration lengths is the maximum shift value, the WUS may also be expected to be transmitted at a location shifted by two ON duration lengths from a WUS occasion.

According to some implementations of the present disclosure, when the methods and/or procedures described in the present disclosure are performed, a monitoring window may be configured to take into account an issue of missing DCI and/or MAC CE, during which the UE may attempt to detect the DCI and/or the MAC CE, and when detection fails, applying the previous offset may be maintained or an original/default offset may be applied. A time point of applying an offset value may be indicated, via the DCI and/or the MAC CE, as an absolute time point (e.g., frame, subframe, slot index, or a combination thereof) or a relative time point (e.g., X ms after a time point where an offset is indicated, or Y slots after the time point where the offset is indicated) based on a time point where the offset is indicated (i.e., a time point where the DCI and/or the MAC CE is received). When the duration of the dynamically indicated offset (or offset value) expires, the UE may automatically return to the original/default offset value or continue to maintain the indicated offset value until receiving a separate indication.

The methods and/or procedures according to the present disclosure are described mainly for C-DRX for convenience, but may also be applied to I-DRX. For example, the methods and/or procedures according to the present disclosure may be applied by making the ON duration for PDCCH monitoring within a C-DRX cycle a time period for performing paging monitoring within an I-DRX cycle.

### <Implementation 2> Method of configuring a WUS occasion for ON/OFF of an ON duration for UE(s) with C-DRX configured and method of configuring/indicating ON/OFF for a plurality of ON durations through one WUS

A plurality of WUS occasions may be configured to overlap or be consecutive through an offset and/or the location of a plurality of ON durations and ON/OFF for the ON durations may be indicated through a specific field in the WUS.

It may be possible to configure/indicate ON/OFF for the plurality of ON durations (of a single UE or a plurality of different UEs) included in a specific time duration or a specific number of DRX cycles through a single WUS. In this case, a specific time duration or a specific number of DRX cycles may be indicated with a WUS or may be pre-configured/indicated.

In detail, the BS may transmit a WUS in DCI format 2_6 in a WUS occasion configured before an ON duration when there is no data to be transmitted/received in the upcoming ON duration to/from the UE(s) with C-DRX configured, indicating to the UE(s) that there is no need to wake up in the corresponding ON duration. A UE that receives the corresponding WUS indication may continue to remain in a sleep state without switching to an active mode, thereby saving more energy. In some scenarios, the UE may be configured via UE dedicated RRC with the total size of the WUS DCI along with the starting bit index + the size of the SCel dormancy field. For example, when the starting bit index is n and the size of the Scell dormancy field is m, the n-th to the (n+m)-th bits are considered as information, and the rest are considered reserved.

In terms of the BS, when the UE is maintained in an inactive mode via a WUS, energy saving opportunities may increase, but to inform all or a large number of UEs within a cell that the UEs do not need to wake up during the ON duration, a plurality of WUSs need to be transmitted during each configured WUS occasion. Therefore, when WUS occasions are distributed in time, the BS may have to repeat an operation of sleeping for a very short time and waking up again for each occasion to transmit a WUS. A plurality of WUSs needs to be transmitted at respective WUS occasions configured for a specific UE to inform the UE that the UE does not need to wake up for a plurality of ON durations, and thus it may be advantageous in terms of energy saving of the BS to indicate OFF for a plurality of ON durations through a single WUS to ensure a long sleep time of the BS.

According to some implementations of the present disclosure, the BS may reduce switching between active/inactive modes by configuring a plurality of WUS occasions to fully/partially overlap or consecutively through an offset for each UE. For example, when a first WUS occasion, a second WUS occasion, and a third WUS occasion are configured in TDM format on the time-axis (also called time-domain) without overlapping, the first WUS occasion, the second WUS occasion, and the third WUS occasion may be configured to fully overlap or configured consecutively without a gap such that the plurality of WUSs may be transmitted in one occasion. There is no need to transmit a WUS during the remaining time duration by transmitting the WUS to a plurality of UEs in a cell at one occasion, and thus there is an advantage in that the BS is capable of ensuring a sleep mode time as long as possible without having to switch back to an active mode. It may also be possible to indicate ON/OFF and/or offset values for a plurality of ON durations within the WUS. For example, N ON durations may be configured within a DRX cycle, and the locations and/or ON/OFF of the N ON durations may be indicated through a WUS of an N-bit bitmap. Here, a relationship between each bit of a bitmap including N bits and each ON duration located within the DRX cycle may be previously arranged/configured/indicated. Therefore, each UE may know previously which bit of the corresponding bitmap its ON duration corresponds to. For example, in a 2-bit bitmap, a first bit may be a first ON duration of a first UE located earliest in time within the DRX cycle, and a second bit may be an ON duration located immediately following (or directly following) the first ON duration. The BS may indicate the location of the ON duration within the DRX cycle through the bitmap within a WUS, and when the bit is '1', an actual start location of the ON duration may be determined by determining at which '1' the bit is in the bitmap information. For example, when a bit position of a UE is a fourth bit in a 4-bit bitmap, in the case of 1111, the bit position may be a fourth ON duration position from among 4 consecutive ON durations, and in the case of 0001, it may be interpreted that an ON duration for the UE is shifted to a first ON duration location.

The energy saving effect of the BS may be increased by configuring/indicating ON/OFF for a plurality of ON durations (of a single UE or a plurality of different UEs) included in a specific time duration through a single WUS. For example, one WUS per UE may indicate ON/OFF for one ON duration, but one WUS may indicate ON/OFF for a plurality of ON durations within a specific number of DRX cycles or a plurality of ON durations within a specific time durations at once. For ON duration(s) of a plurality of UEs, ON/OFF indications may also be given through a single WUS for ON duration(s) belonging to a specific time duration or within a specific number of DRX cycles. In the current WUS DCI structure, when the starting bit index is n and the size of the SCell dormancy field is m, it may be interpreted that an additional bit is added to m, or a specific state from among the states to be indicated by nth to (n+m)-th bit(s) is turned ON/OFF for a plurality of ON durations. Alternatively, a bit for ON/OFF may be added and specified.

The methods and/or procedures according to the present disclosure are described mainly for C-DRX for convenience, but may also be applied to I-DRX through appropriate substitution. For example, the methods and/or procedures according to the present disclosure may be applied by making the ON duration for PDCCH monitoring within a C-DRX cycle a time duration for performing paging monitoring within an I-DRX cycle.

### <Implementation 3> Method of configuring (multiple) DRX configurations for NES separately from UE-specific DRX configurations or introducing DRX groups for NES

Separately from a primary DRX group and/or secondary DRX group (if configured) to be configured for each serving cell (Scell), or for each DRX group, single/multiple DRX groups for NES may be configured. Hereinafter, the DRX group for NES is also referred to as an NES DRX group.

In this case, DRX groups of multiple UEs may be dynamically switched through (GC-)DCI and/or (GC-)MAC CE.

The NES DRX group may separately configure DRX parameters for a common parameter per group in addition to an ON duration timer (e.g., *drx-OnDurationTimer*) and inactivity timers (e.g., *drx-InactivityTimer*). Alternatively, additional parameters for NES may be configured from among the DRX parameter(s) within the primary DRX group and/or the secondary DRX group.

When the primary DRX group and the secondary DRX group are configured for the UE, the UE may perform a DRX operation by using the following method. When the primary DRX group and the secondary DRX group are configured and the NES operation/mode is configured/indicated, the UE may perform the DRX operation by applying parameters configured in the primary DRX group to all cells belonging to the primary DRX group and the secondary DRX group.

When a NES operation/mode is configured/indicated in a state in which the primary DRX group and the secondary DRX group are configured and the DRX group for NES (also called UE-group DRX for NES) is separately configured, the UE may perform DRX operation by applying the parameters configured in the DRX group for NES for all cells belonging to the primary DRX group and the secondary DRX group.

The UE may operate in an active mode only in the corresponding ON duration(s) that intersect with the ON duration(s) of the configured DRX group(s) or in the ON duration(s) of the DRX group for NES (or NES parameters within the UE-specifically configured DRX group) that is given priority over the UE-specific DRX group, and operate in a sleep mode in the remaining durations.

However, the secondary DRX group may be configured optionally, and when the secondary DRX group is not configured and only one DRX group is configured, an NES DRX group may be additionally configured for the DRX group or parameters for NES may be configured and methods and/or procedures according to the present disclosure may be applied.

In detail, when the BS configures C-DRX to the UE through higher layer signaling (e.g., RRC), two DRX groups with separate DRX parameters may be configured. In this case, the DRX parameter(s) configured separately for each DRX group may be *drx-onDurationTimer and drx-InactivityTimer,* and the common DRX parameter(s) of the DRX group may include *drx-SlotOffset, drx-RetransmissionTimerDL, drx-RetransmissionTimerUL, drx-LongCycleStartOffset, drx-ShortCycle*(optional), *drx-ShortCycleTimer*(optional), *drx-HARQ-RTT-TimerDL, drx-HARQ-RTT-TimerUL,* and *uplinkHARQ-Mode*(optional). When no secondary DRX group is configured, all Scells may belong to only one DRX group (default DRX group), and when two DRX groups are configured, each Scell may be uniquely assigned to one of the two groups. Accordingly, the secondary DRX group may be configured optionally, and when the secondary DRX group is not configured and only one DRX group is configured, an NES DRX group may be additionally configured for the DRX group or parameters for NES may be configured and methods and/or procedures according to the present disclosure may be applied.

The BS may additionally configure DRX configuration for NES for energy saving in addition to the C-DRX configuration and DRX parameter configuration described above. In this case, the DRX configuration for NES may include group-common DRX parameter(s) different from the parameter(s) included in the existing UE-specific DRX configuration to save energy of the BS. Additional configuration of DRX configuration for NES may mean changing an ON duration timer and/or inactivity timer of the UE to adjust an inactive time of the UEs within the cell to suit an energy saving purpose of the BS. The DRX configuration for NES may be one or multiple DRX configurations and may mean introducing a DRX group for NES in addition to the existing primary DRX group and secondary DRX group.

In some scenarios, the primary DRX group and the secondary DRX group may be configured for respective Scells, and according to some implementations of the present disclosure, a DRX group for NES may be additionally configured here, or a DRX group for NES may be configured for each DRX group. That is, a single/multiple DRX group for NES may be configured separately in the primary DRX group, and a single/multiple DRX group for NES may be configured separately in the secondary DRX group. When an additional DRX group for NES is configured, if the BS is in normal operation (i.e., in non-NES mode), the BS may operate as the primary DRX group and the secondary DRX group as before, but when the BS operates for energy saving purposes (e.g., when the BS switches to a sleep mode), the DRX groups of multiple UEs may be dynamically switched to one of the configured specific NES group(s) through (GC-)DCI and/or (GC-)MAC CE. UEs may switch to the NES DRX group according to indication to perform a DRX operation and switch to a sleep mode except for a time when the UE needs to remain active, such as *drx-OnDurationTimer, drx-InactivityTimer,* and *drx-RetransmissionTimerDL*/*UL.*

In addition to parameter(s) such as an ON duration timer and an inactivity timer that are to be configured separately, an NES DRX group may also configure DRX parameter(s) separately for common parameter(s) per DRX group. For example, to save energy of the BS, the BS may separately configure common parameters *drx-SlotOffset* or *drx-LongCycleStartOffset* to a specific value for each DRX group. Parameter(s) for NES from among the DRX parameter(s) within the primary DRX group and/or the secondary DRX group may be additionally configured, and the UE may be enabled to use the parameter(s) for NES only when the BS instructs NES mode ON. Even in this case, the UE(s) may perform a DRX operation by using the DRX parameter(s) for NES configured in the DRX group according to ON/OFF indication for an NES mode of the BS, and switch to a sleep mode except for a time when the UE needs to remain active, such as *drx-OnDurationTimer, drx-InactivityTimer,* and *drx-RetransmissionTimerDL*/*UL.*

When the primary DRX group and the secondary DRX group are configured to the UE and the NES operation/mode is configured/indicated, the UE may perform the DRX operation by applying parameter(s) configured in the primary DRX group to all cells belonging to the primary DRX group and the secondary DRX group. When the NES operation/mode is configured/indicated by the BS, the UE may perform the DRX operation by applying parameter(s) configured in the secondary DRX group to all cells belonging to the primary DRX group and the secondary DRX group, or (equivalently) perform the DRX operation by applying an intersection duration between the ON duration of the primary DRX and the ON duration of the secondary DRX as the ON duration. When a NES operation/mode is configured/indicated in a state in which a DRX group for NES is separately configured/indicated, the UE may perform the DRX operation by applying parameter(s) configured in the primary DRX group to all cells belonging to the primary DRX group and the secondary DRX group. For example, when the ON durations of UE-specific DRX for the first UE, the second UE, and the third UE are configured to be a first time duration (hereinafter, t1), a second time duration (hereinafter, t2), and a third time duration (hereinafter, t3) (configured in TDM format) and a periodicity is T, the ON duration of the NES DRX group is configured to be a duration that may include all of t1, t2, and t3, but the periodicity is configured to be X times larger than T (instead of configuring it such that it occurs quickly at T intervals), whereby the NES DRX group may be configured to include multiple UEs in TDM format with a slightly longer ON duration and have a longer period. The UE(s) may perform a DRX operation with priority by using the DRX parameter configured in a specific DRX group according to ON/OFF indication for an NES mode of the BS, and switch to a sleep mode except for a time when the UE needs to remain active, such as *drx-OnDurationTimer, drx-InactivityTimer,* and *drx-RetransmissionTimerDL*/*UL.*

The UE and/or BS may operate in an active mode only in a duration in which the ON durations of the DRX group(s) configured for respective Scells intersect with each other and may operate in a sleep mode in the remaining durations. For example, when the primary DRX group and the secondary DRX group are configured, an operation may be performed in an in an active mode only in the intersection duration of the ON durations of the two DRX groups. As another example, when only the primary DRX group is configured, the corresponding DRX group may be a default DRX group, and even if an NES DRX group is additionally configured, only a duration in which the ON durations of the two DRX groups intersect with each other may operate in an active mode. The ON section of the DRX group for NES (or NES parameters within the DRX group configured UE-specifically) may be given priority over the DRX group configured UE-specifically, and only the ON duration may be operated in an active mode, while the remaining durations may be operated in a sleep mode. For example, when a UE-specific DRX and a DRX group for NES are configured, the DRX group may be configured/indicated to operate in an active mode only during the overlapping ON durations (or active time) of the two DRX groups. When the ON duration(s) (or active times) of the two DRX groups do not overlap each other, the active/sleep mode may be determined and operated by giving priority to the ON duration of the DRX group for NES. Even when the ON durations (or active times) of two DRX groups overlap each other, the ON durations of the DRX groups for NES are given priority and only the intersected durations are operated as actual ON durations to maintain the active mode, while other durations may be operated in a sleep mode to save energy. The UE(s) may perform DRX operation with the DRX parameter(s) configured for the DRX group(s) for NES with priority over the UE-specific DRX group(s) from among the configured DRX group(s), or may switch to sleep mode except for a time when the UEs need to remain active only during the duration in which the active times of the two DRX groups overlap each other. The methods and/or procedures according to the present disclosure are described mainly for C-DRX for convenience, but may also be applied to I-DRX through appropriate substitution. For example, the methods and/or procedures according to the present disclosure may be applied by making the ON duration for PDCCH monitoring within a C-DRX cycle a time duration for performing paging monitoring within an I-DRX cycle.

### <Implementation 4> Method of configuring a group-common (GC) monitoring occasion when a BS explicitly indicates an ON indication for an NES mode, an offset indication to adjust a starting point of a DRX cycle and/or an ON interval, or switching of a DRX group through a WUS, (GC-)DCI and/or (GC-)MAC CE because the starting point of the C-DRX cycle and/or the ON interval and the WUS occasion may be different for each UE

The BS may configure one or more UE-common monitoring occasions when configuring a C-DRX cycle for a NES switching indication. For example, the NES switch indication may be an ON indication for an NES mode.

The BS may configure a periodic window such that the ON duration(s) of a specific UE group or all UE(s) with C-DRX configured are included at least once within a specific duration, and may transmit a switching indication at least once within a window. In this case, switching means operating in the first DRX cycle/first DRX cycle group and then operating in the second DRX cycle/second DRX cycle group.

In detail, the BS may configure the starting point of the C-DRX cycle and/or ON duration and the WUS occasion differently (i.e., at different times) for each UE in the cell, and thus the BS may explicitly indicate to multiple UEs (or all UEs in the cell) at once, such as an ON indication for the NES mode of the BS, an offset indication for adjusting the starting point of the DRX cycle and/or ON duration, or switching of a DRX groups, through WUS, (GC-)DCI or (GC-)MAC CE, and perform transmission according to an occasion of each UE. In this case, when configuring C-DRX, the corresponding indication may be performed more efficiently by configuring a group-common (GC) monitoring occasion for all UE(s) or a specific group of UE(s).

The BS may configure a periodic window such that the ON duration(s) of a specific UE group or all UE(s) with C-DRX configured are included at least once within a specific duration, and may transmit a switching indication at least once within a window. A problem in which the UE misses the switching indication may arise. Taking this into account, the BS may transmit a switching indication more than once within a configured window. In this case, a UE that is configured a periodically configured monitoring window monitors for an ON indication for the NES mode, an offset indication for adjusting the starting point of a DRX cycle and/or ON duration, or a DRX group switching indication during the corresponding window period, and when no indication is detected during the corresponding window duration, the UE may equally apply a previously recently received indication or perform a DRX operation based on a pre-configured default configuration. The methods and/or procedures according to the present disclosure are described mainly for C-DRX for convenience, but may also be applied to I-DRX. For example, the methods and/or procedures according to the present disclosure may be applied by making the ON duration for PDCCH monitoring within a C-DRX cycle a time period for performing paging monitoring within an I-DRX cycle.

Hereinafter, UE and/or BS operation methods and/or procedures according to ON/OFF durations of UE-specific DRX and/or cell-specific DRX are described in detail.

FIG. 11 illustrates a DL channel reception flow in a UE according to some implementations of the present disclosure.

The UE may receive UE-specific discontinuous reception (DRX) configuration and cell-specific DRX configuration (S1101). First predetermined operations may be performed during a first active time according to the cell-specific DRX configuration, and second predetermined operations may be performed during a time outside the first active time according to the cell-specific DRX configuration (S1102).

FIG. 12 illustrates a DL channel transmission flow in a BS according to some implementations of the present disclosure.

The BS may transmit UE-specific discontinuous reception (DRX) configuration and cell-specific DRX configuration (S1201). First predetermined operations may be performed during a first active time according to the cell-specific DRX configuration, and second predetermined operations may be performed during a time outside the first active time according to the cell-specific DRX configuration (S1202).

### <Implementation 5> Operation method of a UE when a UE-specific DRX configuration (e.g. C-DRX/I-DRX configuration) and cell-specific DRX configuration (e.g. DRX/I-DRX configuration for NES mode operation) are jointly applied

The UE may receive the UE-specific DRX (e.g., C-DRX) configuration or the cell-specific DRX (e.g., DRX/I-DRX for NES mode operation) configuration from the BS. In the case of C-DRX or I-DRX, a UE that is not configured with DRX monitors a PDCCH every slot, while a UE that is configured with DRX monitors only during a pre-configured time duration, and when the PDCCH is detected, the UE transmits/receives according to an indication of the BS. For example, a UE configured with C-DRX may perform PDCCH monitoring while the ON duration timer is operated within a DRX cycle according to parameter(s) in the configured DRX configuration, start an inactivity timer when a PDCCH is received, maintain an active time during the corresponding time duration, and may not perform PDCCH monitoring until an upcoming ON duration when the timer expires, thereby saving energy. In this case, the UE may transmit/receive the corresponding channel(s) and/or signal(s) in the configured resources even in a time duration other than the active time for DL/UL channel(s) and/or signal(s) such as PDCCH/PDSCH/CSI-RS/PRS/PUCCH/PUSCH/SRS, which are configured to be repeatedly transmitted/received. The active time is related to the PDCCH monitoring and CSI reporting of the UE, and the UE may transmit/receive regardless of the active time for DL/UL channel(s) and/or signal(s) that are configured to be semi-static (e.g., channel(s) and/or signal(s) that are configured to be repeatedly transmitted/received). For example, for a UE with I-DRX configured, instead of monitoring paging DCIs for every slot, the UE may save energy by only monitoring paging DCIs at a specific paging occasion (PO) that the UE needs to monitor during each DRX cycle period and not monitoring DCIs during the remaining time.

The BS may configure cell-specific DRX for the NES purpose. In this case, the UE may not perform PDCCH monitoring even during the active time within the DRX cycle, and may omit reception of common channel(s) and/or signal(s) such as SSB/SIB1 or may receive the common channel(s) and/or the signal(s) only at a very long period during the time duration outside the active time. The active time may mean a union of the time durations in which the UE needs to perform PDCCH monitoring for each slot within a DRX cycle, such as *drx-OnDurationTimer, drx-InactivityTimer,* and *drx-RetransmissionTimerDL*/*UL,* or may mean only the time duration in which the ON duration timer within the DRX cycle operates. The UE may not perform transmission/reception on the resources of channel(s) and/or signal(s), such as PDCCH/PDSCH/CSI-RS/PRS/PUCCH/PUSCH/SRS, even if the channel(s) and/or signal(s) are configured to be (repeatedly) transmitted/received during a time duration other than the active time. The cell-specific DRX may be defined for an NES mode/state. When the NES mode/state is configured/indicated by the BS, the UE may be pre-configured to save energy by turning off transmission/reception of some or all DL/UL signals, reducing the amount of frequency resources to transmit/receive, reducing the number of antenna ports used for transmission, or lowering the transmission power during a specific time duration while the UE operates in the NES mode. Alternatively, when the NES mode/state is configured/indicated, the UE may perform the operations defined in the NES mode/state during the active time within a cell-specific DRX cycle, or during a time duration outside the active time.

In this case, the UE-specific DRX (e.g., C-DRX/I-DRX) and the cell-specific DRX (e.g., DRX/I-DRX for NES mode operation) may be jointly configured. In other words, the UE-specific DRX configuration and the cell-specific DRX configuration may be applied jointly. For example, the active time and/or non-active time duration of a UE-specific DRX may overlap the active time and/or non-active time duration of the cell-specific DRX. For example, DRX for C-DRX and NES mode operation may be applied jointly. In this case, the UE may perform the DRX operation through the following methods and/or procedures. During the active time of the cell-specific DRX, the operation defined in the cell-specific DRX or NES mode/state may be performed, and during the time duration other than the active time, the operation may be performed according to the UE-specific DRX configuration. Conversely, during the active time of cell-specific DRX, operations may be performed according to UE-specific DRX configuration, and during time durations other than the active time, the operations defined in the cell-specific DRX or NES mode/state may be performed.

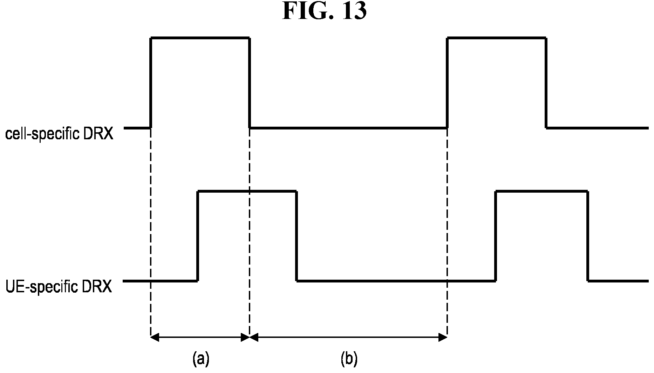

FIG. 13 illustrates a DRX operation in a UE according to some implementations of the present disclosure. In detail, FIG. 13 illustrates an operation of the UE in each duration when UE-specific DRX and cell-specific DRX are jointly configured.

The UE may perform the operations defined for the cell-specific DRX during the active time according to the cell-specific DRX configuration and perform operations according to the UE-specific DRX configuration during a time outside the active time according to the cell-specific DRX configuration. For example, referring to FIG. 13, the operations defined for the cell-specific DRX may be performed during the ON duration (duration (a)) of the cell-specific DRX. That is, in the duration (a), the operations defined for the cell-specific DRX may be performed regardless of the UE-specific DRX. In the OFF duration (duration (b)) of the cell-specific DRX, the operations may be performed according to the UE-specific DRX configuration. For example, in duration (b), when the UE-specific DRX is in the ON duration, PDCCH monitoring may be performed during the duration, and when the UE-specific DRX is OFF during duration (b), PDCCH monitoring may not be performed.

The UE may perform the operations according to the UE-specific DRX configuration during the active time according to the cell-specific DRX configuration and perform the operations defined in the cell-specific DRX configuration during a time outside the active time according to the cell-specific DRX configuration. For example, referring to FIG. 13, the operations according to the UE-specific DRX may be performed during the ON duration (duration (a)) of the cell-specific DRX. For example, in duration (a), when the UE-specific DRX is in the ON duration, PDCCH monitoring may be performed during the duration, and when the UE-specific DRX is OFF during duration (a), PDCCH monitoring may not be performed. In the OFF duration (duration (b)) of the cell-specific DRX, the operations defined for the cell-specific DRX may be performed. That is, in the duration (b), the operations defined for the cell-specific DRX may be performed regardless of the UE-specific DRX.

In this case, for a specific DRX for cell-specific DRX or NES mode operation, unlike the UE-specific DRX, there may be only an ON duration and no extension of the active time according to PDCCH reception. That is, the inactivity timer may not exist or may not be operated. Alternatively, a (non-zero) inactivity timer may also be configured for DRX for the cell-specific DRX or NES mode operation, in which case the active time may be extended only based on reception of (any or) specific GC-DCI (in DCI format).

According to the methods and/or procedures of the present disclosure, when the UE-specific DRX and the DRX/I-DRX for the cell-specific DRX or NES mode operation are jointly configured, an energy saving effect may be increased by performing an operation according to the DRX/I-DRX configuration for the cell-specific DRX or NES mode operation. For example, when the UE-specific DRX and cell-specific DTX/DRX or NES mode are jointly configured, and the UE is configured/instructed to prioritize the cell-specific DTX/DRX or NES mode operation over the UE-specific DRX operation, even if PDCCH monitoring is required in a duration in the UE-specific DRX operation, if the duration is one in which PDCCH is not transmitted according to the cell-specific DTX configuration, the UE may not perform PDCCH monitoring, thereby saving energy for both the UE and the BS.

### <Implementation 6> Method of performing transmission/reception according to a correlation between the ON duration and an ON/OFF pattern of DRX configuration when DRX (C-DRX or I-DRX) or cell-specific DTX/DRX is configured for a UE, if a specific pattern, which is one of multiple pre-configured time-domain ON/OFF patterns or ON/OFF durations of specific DL/UL signal(s) and/or channel(s), is additionally configured/indicated via (GC-)DCI and/or (GC-)MAC CE

When C-DRX is configured for a connected mode UE, the active time is maintained only in the ON duration within the DRX cycle according to the parameter(s) in the DRX configuration, and PDCCH monitoring is performed for each slot, and the active time may be maintained while the timer for PDCCH reception or retransmission is operated. In this case, the active time may mean a union of the time durations in which the UE needs to perform PDCCH monitoring for each slot within a DRX cycle, such as drx-OnDurationTimer, drx-InactivityTimer, and drx-RetransmissionTimerDL/UL, or may mean only the time duration in which the ON duration timer within the DRX cycle operates. The UE may turn off PDCCH monitoring during time durations other than the active time, and may transmit/receive DL/UL channel(s) and/or signal(s) such as PDCCH/PDSCH/CSI-RS/PRS/PUCCH/PUSCH/SRS that are configured to be (repeatedly) transmitted/received previously, using the configured resources, even during time durations other than the active time. The active time is related to the PDCCH monitoring and CSI reporting of the UE, and the UE may transmit/receive regardless of the active time for DL/UL channel(s) and/or signal(s) that are configured to be semi-static (e.g., channel(s) and/or signal(s) that are configured to be repeatedly transmitted/received). When a UE in idle mode operates according to the I-DRX configuration, this may save energy by performing PDCCH monitoring every slot to check if there is paging information/signal transmitted to the UE only from its own PO within the DRX cycle, and not performing PDCCH monitoring at other times.

The BS may also configure cell-specific DTX/DRX for the NES purpose. In this case, similar to C-DRX, cell-specific DTX/DRX for the NES purpose may be configured to semi-static ON and OFF durations, but the UE and/or the BS may transmit/receive only promised/pre-configured DL/UL channel(s) and/or signal(s) during ON duration or active time within cell-specific DTX/DRX cycle, and PDCCH monitoring may not be performed depending on pre-arrangement/pre-configuration. During time durations other than active time, reception of common channel(s) and/or signal(s) such as SSB/SIB1 may be omitted or received only at a very long period. Transmission/reception may not be performed on the resources of channel(s) and/or signal(s), such as PDCCH/PDSCH/CSI-RS/PRS/PUCCH/PUSCH/SRS, in a time period other than the active time, even if the channel(s) and/or signal(s) are configured to be (repeatedly) transmitted/received during the time period, if the cell-specific DTX/DRX durations overlap each other. In other words, when a time duration in which channel(s) and/or signal(s) such as PDCCH/PDSCH/CSI-RS/PRS/PUCCH/PUSCH/SRS are configured to be (repeatedly) transmitted/received according to preset DRX configurations (e.g., C-DRX/I-DRX) overlaps a time duration outside the active time of cell-specific DTX/DRX, the UE and/or BS may not perform transmission/reception on the resources of the corresponding channel(s) and/or signal(s)

When DRX (C-DRX or I-DRX) and/or cell-specific DTX/DRX are configured whereby a semi-static DRX cycle is configured, a specific pattern from among multiple pre-configured time-domain ON/OFF patterns (or OFF durations of specific DL/UL channel(s) and/or signal(s)) may be additionally configured/indicated via (GC-)DCI and/or (GC-)MAC CE. In this case, as a method for the BS to indicate OFF transmission/reception of DL/UL channel(s) and/or signal(s) for a specific time duration via (GC-)DCI and/or (GC-)MAC CE, there are several methods of previously configuring multiple OFF durations and instructing one of the OFF durations, or previously configuring a timer value and turning OFF for the timer time when OFF is instructed and then turning ON when the timer expires. In this case, an infinite value or an inapplicable value may be configured as a candidate for the pre-configured OFF durations, and if an infinite/non-numerical/inapplicable value is configured/indicated via (GC-)DCI and/or (GC-)MAC CE, OFF may be maintained until a separate ON is indicated. As a method of pre-configuring multiple ON/OFF patterns and indicating a specific pattern via (GC-)DCI and/or (GC-)MAC CE, there is a method of configuring, in addition to the ON/OFF pattern configuring information, information on the duration (or timer) in which the pattern lasts, or configuring/indicating the information separately, and/or a method of switching to the ON duration when the duration (or timer) in which the pattern lasts ends, or switching to a pre-configured upcoming pattern and/or duration.

In a situation in which a DRX cycle operates semi-statically by DRX configuration (C-DRX/I-DRX/cell-specific DTX/DRX), when a dynamic ON/OFF pattern (or OFF duration) is indicated, if the active time of the DRX cycle overlaps the dynamically indicated OFF duration, a possible UE operation method is as follows. Transmission/reception may be performed by considering an intersection duration of a semi-static active time and an ON duration of the dynamically indicated ON/OFF pattern (i.e., an intersection of two time durations), or a union duration of the semi-static active time and the dynamically indicated ON duration (i.e., the union of two time durations) as the ON duration.

In the former case, the UE may transmit/receive only the previously configured/arranged DL/UL channel(s) and/or signal(s) only during the overlapping/intersecting time durations of the semi-static active time and the ON duration of the dynamically indicated ON/OFF pattern, and may turn OFF the transmission/reception of the pre-configured DL/UL channel(s) and/or signal(s) during the non-overlapping/non-intersecting time durations by considering the durations as OFF durations. For example, when PDCCH is configured as the channel(s) and/or signal(s) to be OFF in a duration which is an ON duration in the DRX configuration but an OFF duration in the dynamically indicated pattern, PDCCH monitoring may be turned OFF.

In the case the OFF duration according to the dynamically indicated pattern overlaps/intersects with the semi-static active time (according to the DRX configuration), the dynamically indicated ON/OFF pattern may be given priority and transmission/reception of the DL/UL channel(s) and/or signal(s) that are pre-arranged/pre-configured may be turned OFF even during the active time. In this case, channel(s) and/or signal(s) (e.g., SSB/SIB1, PDCCH) that are allowed for transmission/reception (by predefined rules or by pre-BS configuration) may still be transmitted/received, even in the OFF duration as an exception. Alternatively, when the priority of the semi-static active time (according to DRX configuration) is configured higher than the OFF duration according to a pre-dynamically indicated pattern, transmission/reception for the channel(s) and/or signal(s) (e.g., PDCCH) to be turned OFF may also be permitted during the active time. The UE may defer, extend, or restart timers (e.g., *drx-OnDurationTimer, drx-InactivityTimer,* and *drx-RetransmissionTimerDL*/*UL*) related to the DRX operation during the time duration that overlaps/intersects with the OFF duration of the dynamically indicated ON/OFF pattern with the active time of a semi-static DRX cycle, or after the OFF duration. In this case, deferring the timer(s) may mean, for example, not starting the timer(s) if the active time is expected to overlap the OFF duration, but deferring start of the timer(s) until the OFF duration ends and starting the timer(s) immediately after the OFF duration ends, or starting the timer(s) after a pre-configured/pre-instructed offset value after the OFF duration ends. The UE may skip/defer transmission and/or reception on resources of channel(s) and/or signal(s) such as PDCCH/PDSCH/CSI-RS/PRS/PUCCH/PUSCH/SRS that are configured for repeated transmission/reception during a time duration in which the active time of a semi-static DRX cycle overlaps/intersects with the OFF duration of a dynamically indicated ON/OFF pattern. That is, if the resources of channel(s) and/or signal(s) such as PDCCH/PDSCH/CSI-RS/PRS/PUCCH/PUSCH/SRS are included in the OFF duration or overlap at least partially, transmission and reception may be skipped for the corresponding resources, or transmission and/or reception may be performed after the OFF duration ends. In the case of repetitions of consecutive PDSCH transmission and/or reception, the PDSCH may be skipped/deferred or dropped entirely in a duration that overlaps the OFF duration.

In the latter case, the UE may perform PDCCH monitoring in the semi-static active time as in the existing DRX operation and transmit/receive in the dynamically indicated ON duration.

In the present disclosure, the DRX configuration for the NES purpose or the specific DRX configuration for the NES purpose (or cell-specific DRX configuration) may mean a cell-specific DTX/DRX pattern or active/inactive pattern in which a duration in which the BS transmits/receives minimally or does not (OFF) during a time duration agreed upon and/or pre-configured (e.g., defined in a standard document) for the purpose of saving energy of the BS and a time duration in which the BS operates normally are periodically repeated. In detail, as an example of DRX configuration for NES, the UE may not perform PDCCH monitoring even during the active time within a DRX cycle and may omit reception of common channel(s) and/or signal(s) such as SSB/SIB1 or may receive the common channel(s) and/or the signal(s) only in a very long cycle during a time duration outside the active time. The UE and/or the BS may not perform transmission/reception on resources of channel(s) and/or signal(s), such as PDCCH/PDSCH/CSI-RS/PRS/PUCCH/PUSCH/SRS, even if the channel(s) and/or signal(s) are configured to be repeatedly transmitted/received outside of the active time. When cell-specific DTX/DRX is configured or applied, a NES mode/state may be defined, and when the NES mode/state is configured and/or indicated, the UE and/or the BS may be pre-configured to turn OFF transmission and/or reception of some or all DL/UL channel(s) and/or signal(s), reduce the amount of frequency resources to transmit and/or receive, reduce the number of antenna ports used for transmission, or lower the transmission power to save energy during a specific time duration while operating in the NES mode. A BWP for NES may mean a specific BWP that is switched when the NES mode is turned ON, and this BWP may mean a BWP that includes only a very small number of RBs, i.e., BW, which is the amount of frequency resources from among the BWPs configured to the UE. If the BS operates in non-NES mode, i.e., indicates and/or configures OFF of the NES mode to the UEs in the cell, the BS may transmit/receive DL/UL channel(s) and/or signal(s) in the same manner as in a general BS operation. The DRX configuration for NES may be the same as the C-DRX/I-DRX of the existing UE, or may mean that the time-domain ON/OFF pattern of (multiple) DL/UL channel(s) and/or signal(s) promised is dynamically indicated via L1 (e.g., GC-DCI)/L2 (e.g., GC-MAC CE) signaling or the like.

The UE may perform operations according to some implementations of the present disclosure in connection with receiving a DL channel. The UE may include at least one transceiver, at least one processor; and at least one computer memory operably connected to the at least one processor and storing instructions that, when executed, cause the at least one processor to perform operations according to some implementations of the present disclosure. A processing device for the UE may include at least one processor; and at least one computer memory operably connected to the at least one processor and storing instructions that, when executed, cause the at least one processor to perform operations according to some implementations of the present disclosure. A computer-readable (non-transitory) storage medium may store at least one computer program comprising instructions that, when executed by the at least one processor, cause the at least one processor to perform operations according to some implementations of the present disclosure. A computer program or computer program product may be recorded on at least one computer-readable (non-transitory) storage medium and may contain instructions that, when executed, cause (at least one processor) to perform operations according to some implementations of the present specification.

In the UE, the processing device, the computer-readable (non-volatile) storage medium, and/or the computer program product, the operations may include receiving a UE-specific discontinuous reception (DRX) configuration and a cell-specific DRX configuration, performing first predetermined operations during a first active time according to the cell-specific DRX configuration, and performing second predetermined operations during a time outside the first active time according to the cell-specific DRX configuration.

In some implementations of the present disclosure, the first predetermined operations may include operations defined for cell-specific DRX, and the second predetermined operations may include operations according to the UE-specific DRX configuration.

In some implementations of the present disclosure, the first predetermined operations may include operations according to the UE-specific DRX configuration, and the second predetermined operations may include operations defined for the cell-specific DRX.

In some implementations of the present disclosure, the operations according to the UE-specific DRX configuration may include performing DL channel monitoring during a second active time according to the UE-specific DRX configuration, omitting the DL channel monitoring during a time outside the second active time, or continuing repetitions of a signal for which repetition is configured outside the second active time.

In some implementations of the present disclosure, the operations defined for the cell-specific DRX may include transmitting and receiving only predetermined signals during the first active time, receiving a common signal at a long period during a time outside the first active time, or omitting repetitions of a signal for which repetition is configured outside the first active time.

In some implementations of the present disclosure, the operations defined for the cell-specific DRX may include transmitting and receiving only predetermined signals during the first active time, omitting reception of a common signal during a time outside the first active time, or omitting repetitions of a signal for which repetition is configured outside the first active time.

In some implementations of the present disclosure, the operations defined for the cell-specific DRX may include receiving a network energy saving (NES) mode configuration, and performing NES mode operations during a NES mode operation duration, and in this case, the NES mode operations may include any one of omitting transmission and reception of predetermined signals, reducing a frequency band of the predetermined signals, reducing a number of antenna ports for the predetermined signals, or reducing transmit power of the predetermined signals.

In some implementations of the present disclosure, the operations may further include starting driving of an On duration timer according to the cell-specific DRX configuration to start the first active time, receiving a physical downlink control channel (PDCCH) during the first active time, and terminating the first active time based on expiration of the On duration timer according to the cell-specific DRX configuration.

In some implementations of the present disclosure, the operations may further include starting driving of the On duration timer according to the cell-specific DRX configuration to start the first active time, receiving a physical downlink control channel (PDCCH) during the first active time, and extending the first active time by driving an inactivity timer according to the cell-specific DRX configuration based on the PDCCH including group common downlink control information (GC-DCI).

The BS may perform operations according to some implementations of the present disclosure in association with DL signal transmissions. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

In the BS, the processing device, the computer-readable (non-volatile) storage medium, and/or the computer program product, the operations may include transmitting a UE-specific discontinuous reception (DRX) configuration and a cell-specific DRX configuration, performing first predetermined operations during a first active time according to the cell-specific DRX configuration, and performing second predetermined operations during a time outside the first active time according to the cell-specific DRX configuration.

In some implementations of the present disclosure, the first predetermined operations may include operations defined for cell-specific DRX, and the second predetermined operations may include operations according to the UE-specific DRX configuration.

In some implementations of the present disclosure, the first predetermined operations may include operations according to the UE-specific DRX configuration, and the second predetermined operations may include operations defined for the cell-specific DRX.

In some implementations of the present disclosure, the operations according to the UE-specific DRX configuration may include performing DL channel transmission during a second active time according to the UE-specific DRX configuration, omitting the DL channel transmission during a time outside the second active time, or continuing repetitions of a signal for which repetition is configured outside the second active time.

In some implementations of the present disclosure, the operations defined for the cell-specific DRX may include receiving and transmitting only predetermined signals during the first active time, transmitting a common signal at a long period during a time outside the first active time, or omitting repetitions of a signal for which repetition is configured outside the first active time.

In some implementations of the present disclosure, the operations defined for the cell-specific DRX may include receiving and transmitting only predetermined signals during the first active time, omitting transmission of a common signal during a time outside the first active time, or omitting repetitions of a signal for which repetition is configured outside the first active time.

In some implementations of the present disclosure, the operations defined for the cell-specific DRX may include transmitting a network energy saving (NES) mode configuration, and performing NES mode operations during a NES mode operation duration, and in this case, the NES mode operations may include any one of omitting reception and transmission of predetermined signals, reducing a frequency band of the predetermined signals, reducing a number of antenna ports for the predetermined signals, or reducing transmit power of the predetermined signals.

In some implementations of the present disclosure, the operations may further include starting driving of an On duration timer according to the cell-specific DRX configuration to start the first active time, transmitting a physical downlink control channel (PDCCH) during the first active time, and terminating the first active time based on expiration of the On duration timer according to the cell-specific DRX configuration.

In some implementations of the present disclosure, the operations may further include starting driving of the On duration timer according to the cell-specific DRX configuration to start the first active time, transmitting a physical downlink control channel (PDCCH) during the first active time, and extending the first active time by driving an inactivity timer according to the cell-specific DRX configuration based on the PDCCH including group common downlink control information (GC-DCI).

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

### Industrial Availability

The implementations of the present disclosure may be used in a BS, a UE, or other equipment in a wireless communication system.

## Claims

1. A method of receiving a downlink (DL) channel by a user equipment (UE) in a wireless communication system, the method comprising:
receiving a synchronization signal block (SSB);
transmitting a random access channel (RACH) preamble based on the SSB;
receiving a random access response based on the RACH preamble;
receiving a user equipment (UE)-specific discontinuous reception (DRX) configuration and a cell-specific DRX configuration based on receiving the random access response;
performing first predetermined operations during a first active time according to the cell-specific DRX configuration; and
performing second predetermined operations during a time outside the first active time according to the cell-specific DRX configuration.

2. The method of claim 1, wherein the first predetermined operations include operations defined for cell-specific DRX, and
wherein the second predetermined operations include operations according to the UE-specific DRX configuration.

3. The method of claim 1, wherein the first predetermined operations include operations according to the UE-specific DRX configuration, and
wherein the second predetermined operations include operations defined for cell-specific DRX.

4. The method of claim 2 or 3, wherein the operations according to the UE-specific DRX configuration include:
performing DL channel monitoring during a second active time according to the UE-specific DRX configuration;
omitting the DL channel monitoring during a time outside the second active time; or
continuing repetitions of a signal for which repetition is configured outside the second active time.

5. The method of claim 2 or 3, wherein the operations defined for the cell-specific DRX include:
transmitting and receiving only predetermined signals during the first active time;
receiving a common signal at a long period during a time outside the first active time; or
omitting repetitions of a signal for which repetition is configured outside the first active time.

6. The method of claim 2 or 3, wherein the operations defined for the cell-specific DRX include:
transmitting and receiving only predetermined signals during the first active time;
omitting reception of a common signal at a long period during a time outside the first active time; or
omitting repetitions of a signal for which repetition is configured outside the first active time.

7. The method of claim 2 or 3, wherein the operations defined for the cell-specific DRX include:
receiving a network energy saving (NES) mode configuration; and
performing NES mode operations during a NES mode operation duration, and
wherein the NES mode operations include any one of omitting transmission and reception of predetermined signals, reducing a frequency band of the predetermined signals, reducing a number of antenna ports for the predetermined signals, or reducing transmit power of the predetermined signals.

8. The method of claim 1, further comprising:
starting driving of an On duration timer according to the cell-specific DRX configuration to start the first active time;
receiving a physical downlink control channel (PDCCH) during the first active time; and
terminating the first active time based on expiration of the On duration timer according to the cell-specific DRX configuration.

9. The method of claim 1, further comprising:
starting driving of an On duration timer according to the cell-specific DRX configuration to start the first active time;
receiving a physical downlink control channel (PDCCH) during the first active time; and
extending the first active time by driving an inactivity timer according to the cell-specific DRX configuration based on the PDCCH including group common downlink control information (GC-DCI).

10. A user equipment (UE) for receiving a downlink (UL) signal in a wireless communication system, the UE comprising:
at least one transceiver;
at least one processor; and
at least one computer memory operably connected to the at least one processor and storing instructions that, when executed, cause the at least one processor to perform operations including:
receiving a synchronization signal block (SSB);
transmitting a random access channel (RACH) preamble based on the SSB;
receiving a random access response based on the RACH preamble;
receiving a user equipment (UE)-specific discontinuous reception (DRX) configuration and a cell-specific DRX configuration based on receiving the random access response;
performing first predetermined operations during a first active time according to the cell-specific DRX configuration; and
performing second predetermined operations during a time outside the first active time according to the cell-specific DRX configuration.

11. A processing device in a wireless communication system, the processing device comprising:
at least one transceiver;
at least one processor; and
at least one computer memory operably connected to the at least one processor and storing instructions that, when executed, cause the at least one processor to perform operations including:
receiving a synchronization signal block (SSB);
transmitting a random access channel (RACH) preamble based on the SSB;
receiving a random access response based on the RACH preamble;
receiving a user equipment (UE)-specific discontinuous reception (DRX) configuration and a cell-specific DRX configuration based on receiving the random access response;
performing first predetermined operations during a first active time according to the cell-specific DRX configuration; and
performing second predetermined operations during a time outside the first active time according to the cell-specific DRX configuration.

12. A computer-readable storage non-transitory medium storing at least one computer program including instructions that, when executed by at least one processor, cause the at least one processor to perform operations for a user equipment (UE), the operations comprising:
receiving a synchronization signal block (SSB);
transmitting a random access channel (RACH) preamble based on the SSB;
receiving a random access response based on the RACH preamble;
receiving a UE-specific discontinuous reception (DRX) configuration and a cell-specific DRX configuration based on receiving the random access response;
performing first predetermined operations during a first active time according to the cell-specific DRX configuration; and
performing second predetermined operations during a time outside the first active time according to the cell-specific DRX configuration.

13. A computer program stored in a computer-readable storage medium, the computer program including at least one program code including instructions that, when executed, cause at least one processor to perform operations comprising:
receiving a synchronization signal block (SSB);
transmitting a random access channel (RACH) preamble based on the SSB;
receiving a random access response based on the RACH preamble;
receiving a UE-specific discontinuous reception (DRX) configuration and a cell-specific DRX configuration based on receiving the random access response;
performing first predetermined operations during a first active time according to the cell-specific DRX configuration; and
performing second predetermined operations during a time outside the first active time according to the cell-specific DRX configuration.

14. A method of transmitting a downlink (DL) channel to a user equipment (UE) by a base station (BS) in a wireless communication system, the method comprising,
transmitting a synchronization signal block (SSB);
receiving a random access channel (RACH) preamble based on the SSB;
transmitting a random access response based on the RACH preamble;
transmitting a UE-specific discontinuous reception (DRX) configuration and a cell-specific DRX configuration based on receiving the random access response;
performing first predetermined operations during a first active time according to the cell-specific DRX configuration; and
performing second predetermined operations during a time outside the first active time according to the cell-specific DRX configuration.

15. A base station (BS) for transmitting a downlink (DL) signal to a user equipment (UE) in a wireless communication system, the BS comprising:
at least one transceiver;
at least one processor; and
at least one computer memory operably connected to the at least one processor and storing instructions that, when executed, cause the at least one processor to perform operations including:
transmitting a synchronization signal block (SSB);
receiving a random access channel (RACH) preamble based on the SSB;
transmitting a random access response based on the RACH preamble;
transmitting a UE-specific discontinuous reception (DRX) configuration and a cell-specific DRX configuration based on receiving the random access response;
performing first predetermined operations during a first active time according to the cell-specific DRX configuration; and
performing second predetermined operations during a time outside the first active time according to the cell-specific DRX configuration.
